# EUROPÄISCHE PATENTSCHRIFT

(11) **EP 1 769 022 B1**
(45) Veröffentlichungstag und Bekanntmachung des Hinweises auf die Patenterteilung: **13.08.2008**
(21) Anmeldenummer: 05767373.3
(22) Anmeldetag: 13.06.2005
(51) Int. Cl.: C08K 5/00, C08K 5/3492

(54) **STABILISATORZUSAMMENSETZUNG FÜR GEFÄRBTE HALOGENHALTIGE THERMOPLASTISCHE HARZZUSAMMENSETZUNGEN**
STABILIZER COMPOSITION FOR COLORED HALOGEN-CONTAINING THERMOPLASTIC RESIN COMPOSITIONS
COMPOSITION DE STABILISANT POUR COMPOSITIONS DE RESINES THERMOPLASTIQUES HALOGENEES COLOREES

(30) Priorität: 15.06.2004 DE 102004028821
(43) Veröffentlichungstag der Anmeldung: 04.04.2007
(73) Patentinhaber: Baerlocher GmbH, 85716 Unterschleissheim (DE)
(72) Erfinder: REITH, Walter, 82281 Egenhofen (DE); LISLE, Keith, Morpeth Northumberland NE65 8BL (GB)
(74) Vertreter: Fiesser, Gerold Michael
(86) Internationale Anmeldenummer: PCT/EP2005/006319
(87) Internationale Veröffentlichungsnummer: WO 2005/123819

(56) Entgegenhaltungen:
- EP-A- 0 587 104
- WO-A-20/05047380
- DE-A1- 4 134 325
- DE-A1- 19 818 441
- GB-A- 2 336 590
- US-A- 5 938 977
- US-B1- 6 593 485

## Beschreibung

Gegenstand der Erfindung ist eine mindestens ein Calciumsalz sowie einen Farbstoff oder ein Pigment oder beides enthaltende Stabilisatorzusammensetzung für bewitterungsstabile thermoplastische Harzzusammensetzungen, insbesondere für bewitterungsstabile gefärbte Harzzusammensetzungen auf Polyvinylchlorid - (PVC) - Basis, wobei die Zusammensetzung einen geringen Gehalt an β-Diketonen aufweist bzw. im wesentlichen frei ist von β-Diketonen.

Halogenhaltige Polymere unterliegen einer Vielzahl von gebrauchs- oder umweltinduzierten chemischen Abbaureaktionen, beispielsweise durch Einwirkung von elektromagnetischer Strahlung oder von Wärme oder von Kombinationen aus zwei oder mehr äußeren Einflüssen, die zu nachhaltigen Beeinträchtigungen der Gebrauchseigenschaften führen können oder bereits zu Problemen während der Verarbeitung führen. Bei dem Abbau halogenierter Polymerer, insbesondere bei PVC, entsteht oft Salzsäure, die aus dem Polymerstrang eliminiert wird, woraus ein verfärbter, ungesättigter Kunststoff mit farbgebenden Polyenseqüenzen resultiert.

Besonders problematisch wirkt sich dabei aus, dass halogenhaltige Polymere erst bei einer relativ hohen Verarbeitungstemperatur die zur Verarbeitung notwendigen rheologischen Rahmenbedingungen aufweisen. Bei derartigen Temperaturen setzt jedoch bei unstabilisierten Polymeren bereits eine merkliche Zersetzung des Polymeren ein, die sowohl zu der oben beschriebenen unerwünschten Farbänderung als auch zu einer Änderung der Materialeigenschaften führt. Darüber hinaus kann die aus nicht stabilisierten, halogenhaltigen Polymeren bei einer derartigen Verarbeitungstemperatur freigesetzte Salzsäure zu einer merklichen Korrosion der Verarbeitungsanlagen führen. Dieser Vorgang spielt insbesondere dann eine Rolle, wenn es bei der Verarbeitung derartiger halogenierter Polymerer zu Formkörpern, beispielsweise durch Extrusion, zu Produktionsunterbrechungen kommt und die Polymermasse für eine längere Zeitdauer im Extruder verweilt. Während dieser Zeit kann es in besonderem Maße zu den oben genannten Zersetzungsreaktionen kommen, wodurch die im Extruder befindliche Charge unbrauchbar wird und der Extruder gegebenenfalls geschädigt wird.

Um die genannten Probleme zu lösen, werden halogenhaltigen Polymeren zur Verarbeitung üblicherweise als so genannte Stabilisatoren Verbindungen zugesetzt, welche die oben genannten Zersetzungsreaktionen möglichst weitgehend verhindern sollen. In der Regel handelt es sich bei derartigen Stabilisatoren um Feststoffe, welche dem zu verarbeitenden Polymeren vor seiner Verarbeitung zugegeben werden.

Der Einsatz von Calciumhydroxid als Stabilisator für PVC wird beispielsweise in der DE 29 35 689 A1 beschrieben. Aus der EP 0 394 547 B1 ist die Kombination von überbasischen Erdalkalicarboxylaten mit Zeolith, Calciumhydroxid und Perchloraten bekannt.

Die WO 99/55777 beschreibt eine Stabilisatorzusammensetzung für halogenhaltige thermoplastische Harzzusammensetzungen. Gemäß der Druckschrift wird zur Stabilisierung ein Gemisch aus gegebenenfalls oberflächenmodifiziertem Calciumhydroxid und/oder Calciumoxid und einem hydroxylgruppenhaltigen Isocyanurat vorgeschlagen.

Verarbeitungshilfsmittel sind zur gezielten Einstellung der Eigenschaften während und nach der Verarbeitung von halogenhaltigen thermoplastischen Polymeren in der Regel unerläßlich. Neben dem Aspekt der oft nicht unerheblichen Kosten, die für solche Verarbeitungshilfsmittel aufgewandt werden müssen, rückt immer häufiger die Beeinflussung des gesamten Eigenschaftsbilds eines halogenhaltigen thermoplastischen Polymeren durch Stabilisatoren und Verarbeitungshilfsmittel in den Blickpunkt der verarbeitenden Industrie. In zunehmendem Maße werden daher bei der Verarbeitung von halogenhaltigen Polymeren Stabilisatoren verlangt, die auch bei geringen Einsatzmengen gleichzeitig ausgezeichnete Verarbeitungseigenschaften und eine den jeweiligen Bedürfnissen angemessene Stabilität bewirken. Als Maßnahme zur Verbesserung der stabilisierenden Eigenschaften von Stabilisatorzusammensetzungen, die zur Stabilisierung halogenhaltiger Polymerer eingesetzt werden wird im Stand der Technik häufig der Einsatz von β-Diketonen vorgeschlagen.

So beschreibt beispielsweise die DE 694 29 805 T2 die Verwendung von β-Diketonen als Stabilisatoren für halogenhaltige Polymere. Weitere Druckschriften die den Einsatz derartiger Verbindungen zur Stabilisierung halogenhaltiger Polymerer beschreiben sind beispielsweise die US 5,475,145, EP 0 346 279 A1 oder EP 0 307 358 A1.

Mit der Wirkung von β-Diketonen in Stabilisatorzusammensetzungen setzte sich beispielsweise auch die nicht vorveröffentlichte Deutsche Patentanmeldung mit der Nr. 10352762.1 auseinander.

Insgesamt ist dem Stand der Technik zu entnehmen, dass der Einsatz von β-Diketonen als Betandteil von Stabilisatorzusammensetzungen aufgrund der Verbesserung der Thermostabilität angeraten ist. Problematisch wirkt sich die Anwesenheit von β-Diketonen in Stabilisatorzusammensetzungen für halogenhaltige Polymere jedoch überraschenderweise bei gefärbten halogenhaltigen Polymeren aus, also bei Polymerzusammensetzungen, die Farbstoffe oder Pigmente oder beides enthalten.

Materialien aus gefärbten halogenhaltigen Polymeren werden überwiegend im Außenbereich eingesetzt. Aufgrund dieser Tatsache stehen derartige Materialien oft im direkten Kontakt mit Umwelteinflüssen. Hierzu zählen insbesondere starke Temperaturschwankungen, energiereiche Strahlung, mechanische Beanspruchung und dergleichen. Insbesondere dann, wenn die Materialien aus halogenhaltigen Polymeren sichtbar angeordnet sind wird aus ästhetischen Gründen häufig darauf Wert gelegt, dass auch bei langer anhaltender Bewitterung das äußere Erscheinungsbild des Materials nicht oder nicht mehr als nötig verändert wird.

Bei gefärbten halogenhaltigen Polymeren ist nach länger anhaltender Bewitterung häufig ein Ausbleichen des Materials zu beobachten. Neben einer in der Regel unerwünschten ästhetischen Beeinträchtigung des aus einem entsprechenden Material gefertigten Bauteils leidet unter einer derartigen Verwitterung auch die mechanische Stabilität. Bislang wurde hingenommen, dass mit den aus dem Stand der Technik bekannten Stabilisatorzusammensetzungen bei künstlicher Bewitterung eine beginnende Ausbleichung des Materials üblicherweise nach einem Zeitraum von etwa 1000 h festzustellen ist. Überraschenderweise ist dieser Zeitraum in nahezu identischer Form sowohl bei oft eingesetzten Blei-Rezepturen als auch bei neueren Rezepturen auf Calcium-Zink Basis zu beobachten. Ein vollständiges oberflächliches Ausbleichen findet dann bei den obengenannten Rezepturen innerhalb eines weiteren Zeitraums von bis zu etwa 500 h statt.

Derartige Veränderungen der polymeren Struktur eines entsprechenden Bauteils führen zu einer Vielzahl von Nachteilen. Veränderungen des Erscheinungsbilds eines im Außenbereich eingesetzten Bauteils in der oben geschilderten Form werden vom Anwender üblicherweise nicht oder nur schwer akzeptiert. Darüber hinaus ist als nachteilig festzuhalten, dass aufgrund des Ausbleichungsvorgangs die mechanischen Eigenschaften des Bauteils leiden können.

Bislang sind im Stand der Technik keine Ansätze dahingehend zu entnehmen, wie die obengenannten Nachteile bei Materialien aus gefärbten halogenhaltigen Polymeren vermieden werden können. Häufig wird in diesem Zusammenhang empfohlen, entsprechende Stabilisatoren gegen energiereiche Strahlung, insbesondere gegen UV-Strahlung einzusetzen. Während diese Maßnahmen zwar eine geringfügige Verzögerung des Ausbleichungsprozesses bewirken können, bleibt das grundsätzliche Problem der zu schnellen Veränderungen der Materialeigenschaften jedoch bestehen.

Der Erfindung liegt daher die Aufgabe zugrunde, eine Stabilisatorzusammensetzung für halogenhaltige thermoplastische Harze zur Verfugung zu stellen, die im Vergleich zu aus dem Stand der Technik bekannten Formulierungen eine ausreichende Bewitterungsstabilität aufweist Der Erfindung liegt weiterhin die Aufgabe zugrunde, eine Stabilisiatorzusammensetzung für halogenhaltige thermoplastische Harze zur Verfügung zu stellen, die besonders für den Einsatz in PVC-U für den Außenbereich geeignet ist.

Diese Aufgabe wird erfindungsgemäß gelöst durch eine Stabilisatoizusammensetzung für halogenhaltige thermoplastische Harze, beispielsweise umfassend
(a) mindestens eine stabilisierende Calciumverbindung, beispielsweise Calciumhydroxid und/oder Calciumoxid, die gegebenenfalls oberflächenmodifiziert sein können, oder ein Calciumsalz einer organischen Carbonsäure und
(b) mindestens ein Farbstoff oder mindestens ein Pigment oder beides, wobei der Farbstoff oder das Pigment dem halogenhaltigen thermoplastischen Harz den Farbwert von L ≤ 95, a = 0 ± > 1 oder b = 0 ± > 1 oder a = 0 ± > 1 und b = 0 ± > 1 verleiht, wobei der Farbwert im Lab-System mit der Lichtart D65 gemessen wird, und
(c) mindestens ein Hydroxylgruppen tragendes Isocyanurat,
wobei der Gehalt der Stabilisatorzusammensetzung an β-Diketonen weniger als 0,1 Gew.-%, bezogen auf die gesamte Stabilisatorzusammensetzung, beträgt.

Gegenstand der vorliegenden Erfindung ist daher eine Stabilisatorzusammensetzung zur Stabilisierung halogenhaltiger thermoplastischer Harze, umfassend
(a) mindestens eine stabilisierende Calciumverbindung oder ein Gemisch aus zwei oder mehr solcher Verbindungen als Komponente A und
(b) mindestens einen Farbstoff oder ein Pigment oder deren Gemisch als Komponente B, wobei der Farbstoff oder das Pigment dem halogenhaltigen thermoplastischen Harz den Farbwert von L ≤ 95, a = 0 ± >1 oder b = 0 ± >1 oder a = 0 ± >1 und b = 0 ± >1 verleiht, wobei der Farbwert im Lab-System mit der Lichtart D65 gemessen wird, und
(c) mindestens ein Hydroxylgruppen tragendes Isocyanurat oder ein Gemisch aus zwei oder mehr solcher Verbindungen als Komponente C,
wobei der Gehalt der Stabilisatorzusammensetzung an β-Diketon oder Salzen eines β-Diketons oder deren Gemischen weniger als 0,1 Gew.%, bezogen auf die gesamte Stabilisatorzusammensetzung, beträgt.

Eine Stabilisatorzusammensetzung gemäß der vorliegenden Erfindung eignet sich grundsätzlich zur Stabilisierung von Zusammensetzungen, die mindestens ein halögenhaltiges Polymeres, insbesondere mindestens ein halogenhaltiges thermoplastisches Harz enthalten. Es ist dabei erfindungsgemäß vorgesehen, dass eine erfindungsgemäße Stabilisatorzusammensetzungen mindestens eine stabilisierende Calciumverbindung, beispielsweise stabilisierendes Calciumsalz, enthält Als stabilisierende Calciumverbindungen sind grundsätzlich alle Calciumverbindungen, beispielsweise Calciumsalze, geeignet, die einen stabilisierende Einfluss auf halogenhaltige thermoplastische Harze zeigen, insbesondere einen stabilisierenden Einfluss hinsichtlich Abbauerscheinungen durch thermische Belastungen, wie sie insbesondere bei der Verarbeitung solcher halogenhaltigen thermoplastischen Harze auftreten.

Als Komponente A eignen sich beispielsweise Calciumoxid oder Calciumhydroxid oder deren Gemisch in im wesentlichen beliebiger Form. Calciumoxid oder Calciumhydroxid werden dabei vorzugsweise in Pulverform eingesetzt. Geeignete Pulver können eine im Wesentlichen beliebige Größenverteilung der Pulverteilchen aufweisen, solange sich das Stabilisierungsergebnis durch die gewählte Teilchengrößenverteilung nicht oder nicht wesentlich mehr als den Umständen nach tolerierbar, verschlechtert. Entsprechendes gilt für die BET-Oberfläche der eingesetzten Teilchen.

Beispielsweise werden im Rahmen der vorliegenden Erfindung Calciumoxid-oder Calciumhydroxidpartikel eingesetzt, die einen Wert D50 für die Teilchengrößenverteilung von etwa 30 µm oder weniger aufweisen, insbesondere weniger als etwa 10 µm. oder weniger als etwa 5 µm. Die sekundäre Partikelgröße (Agglomeratgröße) sollte einen Wert von etwa 40 µm nicht überschreiten. Vorzugsweise beträgt die sekundäre Partikelgröße weniger als etwa 40 µm, insbesondere weniger als etwa 30 µm oder weniger als etwa 20 µm.

Die Calciumoxid oder Calciumhydroxidpartikel können gegebenenfalls in dem Fachmann bekannter Weise oberflächenmodifiziert sein. Besonders geeignet sind mit Stearinsäure oder 12-Hydroxystearinsäure oberflächenmodifizierte Partikel.
Ebenfalls als stabilisierende Calciumverbindungen geeignet sind Calciumseifen von gesättigten, ungesättigten, geradkettigen oder verzweigten, aromatischen, cycloaliphatischen oder aliphatischen Carbonsäuren oder Hydroxycarbonsäuren mit vorzugsweise etwa 2 bis etwa 22 C-Atomen.

Beispiele für geeignete Carbonsäureanionen umfassen Anionen von monovalenten Carbonsäuren wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Laurylsäure, Isostearinsäure, Stearinsäure, 12-Hydroxystearinsäure, 9,10-Dihydroxystearinsäure, Ölsäure, 3,6-Dioxaheptansäure, 3,6,9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, Sorbinsäure, Anionen von divalenten Carbonsäuren bzw. deren Monoestern wie Oxalsäure, Malonsäure, Maleinsäure, Weinsäure, Zimtsäure, Mandelsäure, Äpfelsäure, Glykolsäure, Oxalsäure, Salicylsäure, Polyglykoldicarbonsäuren mit einem Polymerisationsgrad von etwa 10 bis etwa 12, Phthalsäure, Isophthalsäure, Terephthalsäure oder Hydroxyphthalsäure, Anionen von tri- oder tetravalenten Carbonsäuren bzw. deren Mono-, Di- oder Triestern wie sie in Hemimellithsäure, Trimellithsäure, Pyromellithsäure oder Zitronensäure sowie ferner sogenannte überbasische Carboxylate wie sie beispielsweise in der DE-A 41 06 404 oder der DE-A 40 02 988 beschrieben werden, wobei die Offenbarung der letztgenannten Dokumente als Bestandteil der Offenbarung des vorliegenden Textes betrachtet wird.

Im Rahmen einer bevorzugten Ausführungsform der vorliegenden Erfindung werden vorzugsweise Calciumseifen eingesetzt, deren Anionen sich von gesättigten oder ungesättigten Carbonsäuren oder Hydroxycarbonsäuren mit etwa 8 bis etwa 20 C-Atomen ableiten. Besonders geeignet sind hierbei Stearate, Oleate, Laurate, Palmitate, Behenate, Versatate, Hydroxystearate, Dihydroxystearate, p-tert-Butylbenzoate oder (Iso)Octanoate von Calcium oder Gemische aus zwei oder mehr davon. Im Rahmen einer weiteren Ausführungsform der vorliegenden Erfindung enthält eine erfindungsgemäße Stabilisatorzusammensetzung beispielsweise Calciumstearat.

Es hat sich erfindungsgemäß herausgestellt, dass besonders gute Ergebnisse erzielt werden können, wenn die Stabilisatorzusammensetzung die Komponente A in einer Menge von 0,01 bis 30 phr oder etwa 0,02 bis etwa 20 oder bis etwa 10 phr, bezogen auf das zu stabilisierende thermoplastische Harz oder die zu stabilisierenden thermoplastischen Harze, enthält. Besonders geeignete Anteile an Komponente A liegen beispielsweise in einem Bereich von etwa 0,05 bis etwa 3,0 phr, oder innerhalb eines Bereichs von etwa 0,08 bis etwa 2,0 phr. Ebenfalls geeignet sind beispielsweise Mengen von etwa 0,1 bis etwa 1,5 phr, beispielsweise etwa 0,15 bis etwa 1,0 phr oder etwa 0,2 bis etwa 0,8 phr oder etwa 0,25 bis etwa 0,5 phr.

Neben einem stabilisierenden Calciumsalz oder einem Gemisch aus zwei oder mehr solcher Salze enthält eine erfindungsgemäße Stabilisatorzusammensetzungen mindestens einen Farbstoff oder mindestens ein Pigment oder ein Gemisch aus mindestens einem Farbstoff und mindestens einem Pigment als Komponente B.

Eine erfindungsgemäße Stabilisatorzusammensetzung betrifft daher im Rahmen der vorliegenden Erfindung die Stabilisierung von farbigen halogenhaltigen Polymeren. Der Begriff "farbig" betrifft dabei im Rahmen der vorliegenden Erfindung im Lab-System mit der Lichtart D65 gemessene Farbwerte von L ≤ 95, unabhängig von den jeweils gemessenen Werten für Buchstabe a und b. Unter den Begriff "farbig" fallen solche Farbwerte, bei denen L ≤ 95, a = 0 ± >1 oder b = 0 ± >1 oder a = 0 ± >1 und b = 0 ± >1. So zeichnet sich beispielsweise ein häufig im Rahmen der Herstellung von PVC-Rohren eingesetzter Farbton "Terracotta" durch die Farbwerte L = etwa 45, a = etwa 30 und b = etwa 37 aus.

Der im Rahmen des vorliegenden Textes verwendete Begriff "Stabilisatorzusammensetzung" kann sich daher einerseits auf eine die obengenannten Inhaltsstoffe aufweisende Stabilisatorzusammensetzung selbst beziehen. Er kann sich jedoch darüber hinaus ebenfalls auf eine bereits in einer Polymerzusammensetzung enthaltene Stabilisatorzusammensetzung beziehen, unabhängig von deren Zustandekommen. So kann der erfindungsgemäße Begriff "Stabilisatorzusammensetzung" beispielsweise auch Stabilisatorzusammensetzungen umfassen, wie sie in bereits mit Polymermaterialien vermischter Form vorliegen, wobei die einzelnen Inhaltsstoffe der Stabilisatorzusammensetzung und ein Farbstoff oder ein Pigment oder beides vollständig teilweise nacheinander dem Polymeren zugeführt wurden.

Als Farbstoffe zum Einsatz im Rahmen der vorliegenden Stabilisatorzusammensetzungen eignen sich grundsätzlich alle Farbstoffe, die einer einen solchen Farbstoff enthaltenden Polymerzusammensetzung die gewünschten Farbwerte verleihen. Entsprechend eignen sich als Pigmente zum Einsatz im Rahmen der vorliegenden Stabilisatorzusammensetzungen grundsätzlich alle Pigmente, die einer ein solches Pigment enthaltenden Polymerzusammensetzung die gewünschten Farbwerte verleihen. Erwähnenswert sind hierbei beispielsweise die Oxide, Sulfide, Chromate und der Kohlenstoff, die üblicherweise der Klasse der anorganischen Pigmente zugeordnet werden. Ebenfalls geeignet sind organische Farbstoffe und Pigmente, insbesondere solche aus der Gruppe der Azofarbstoffe bzw. Azopigmente sowie aus der Gruppe der polycyclischen aromatischen Verbindungen.

Besonders geeignete Farbstoffe und Pigmente sind beispielsweise Eisenoxid, Kupferoxid, Chromoxid, Mischoxide enthaltend Kupfer und Chrom oder Kupfer und Eisen oder Kupfer und Chrom und Eisen in unterschiedlichen Anteilen, Ruße, Eisenoxidgelb, Nickeltitangelb, Cd-Sulfid, Cd-Selenid, Bleichromat, Bleimolybdat, Chromoxid, Sb-Oxid, Eisenoxidrot-Typen, Ultramarine, Kobaltblau-Typen, Chromoxiddihydrat, Chromoxid, Kobaltgrün, Hansapigmente, Benzidinpigmente, Toluidinpigmente, Litholrot-Typen, Grüngold, Naphthol-AS-Typen, Azokondensationspigmente, Metallkomplexpigmente, Anthrapyrimidin, Anthrathron, Perylene, Pyranthron, Chinophthalon, Trans-Perinon, Thioindigo-Typen, Chonacridone, Isoviolanthron, Anilinschwarz, Indanthrenblau, Dioxazine, Phthalocyaninblau-Typen, Phthalocyaningrünblau-Typen oder Phthalocyaningrün-Typen.

Es hat sich erfindungsgemäß herausgestellt, dass besonders gute Ergebnisse erzielt werden können, wenn die Stabilisatorzusammensetzung die Komponente B in einer Menge von 0,01 bis 30 phr oder etwa 0,02 bis etwa 20 oder bis etwa 10 phr, bezogen auf das zu stabilisierende thermoplastische Harz oder die zu stabilisierenden thermoplastischen Harze, enthält. Besonders geeignete Anteile an Komponente B liegen beispielsweise in einem Bereich von etwa 0,05 bis etwa 6,0 phr, oder innerhalb eines Bereichs von etwa 0,08 bis etwa 4,0 phr. Ebenfalls geeignet sind beispielsweise Mengen von etwa 0,1 bis etwa 3 phr, beispielsweise etwa 0,15 bis etwa 2,0 phr oder etwa 0,2 bis etwa 1,6 phr oder etwa 0,25 bis etwa 1 phr.

Neben den Komponenten A und B enthält eine erfindungsgemäße Stabilisatorzusammensetzung noch weitere Verbindungen. Es hat sich erfindungsgemäß als vorteilhaft herausgestellt, wenn zur Verbesserung der Stabilisierungswirkung eine erfindungsgemäße Stabilisatorzusammensetzung mindestens ein Hydroxylgruppen tragendes Isocyanurat enthält. Neben einem stabilisierenden Calciumsalz oder einem Gemisch aus zwei oder mehr solcher Salze und den Farbstoffen oder Pigmenten oder einem Gemisch aus einem Farbstoff und einem Pigment enthält eine erfindungsgemäße Stabilisatorzusammensetzungen daher mindestens ein Hydroxylgruppen tragendes Isocyanurat oder ein Gemisch aus zwei oder mehr solcher Verbindungen als Komponente C.

Grundsätzlich eignen sich im Rahmen der vorliegenden Erfindung als Komponente C alle Isocyanurate, die mindestens eine OH-Gruppe aufweisen. Im Rahmen einer bevorzugten Ausführungsform der vorliegenden Erfindung werden jedoch Isocyanurate eingesetzt, die mindestens zwei OH-Gruppen enthalten. Besonders bevorzugt ist im Rahmen der vorliegenden Erfindung jedoch der Einsatz von Isocyanuraten, die drei OH-Gruppen aufweisen.

Im Rahmen einer besonders bevorzugten Ausführungsform der vorliegenden Erfindung wird das hydroxylgruppenhaltige Isocyanurat aus Verbindungen der allgemeinen Formel (II) 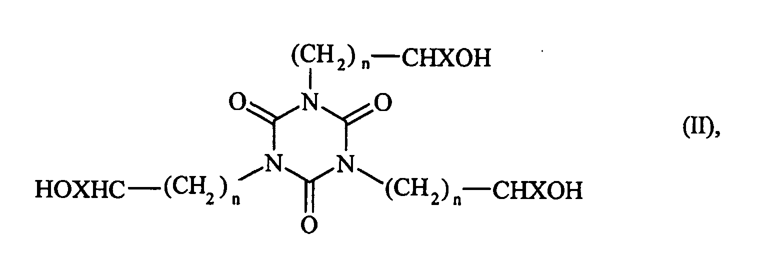 worin die Gruppen X und die Indices n gleich oder verschieden sind und n für eine ganze Zahl von 0 bis 5 und X für ein Wasserstoffatom oder für eine lineare oder verzweigte Alkylgruppe mit 1 bis 6 Kohlenstoffatomen steht, ausgewählt.

Besonders bevorzugt sind dabei Tris(hydroxyethyl)isocyanurat (im folgenden als THEIC bezeichnet) sowie gehinderte phenolische Isocyanurate gemäß der EP 0 685 516 B1, auf deren Offenbarung hinsichtlich entsprechender gehinderter phenolischer Isocyanurate ausdrücklich Bezug genommen wird und deren solche Isocyanurate betreffende Offenbarung als Bestandteil der Offenbarung des vorliegenden Textes verstanden wird.

Es hat sich erfindungsgemäß herausgestellt, dass besonders gute Ergebnisse erzielt werden können, wenn die Stabilisatorzusammensetzung die Komponente C in einer Menge von 0,001 bis 10 phr oder etwa 0,002 bis etwa 8 oder bis etwa 5 phr, bezogen auf das zu stabilisierende thermoplastische Harz oder die zu stabilisierenden thermoplastischen Harze, enthält. Besonders geeignete Anteile an Komponente C liegen beispielsweise in einem Bereich von etwa 0,005 bis etwa 3,0 phr, oder innerhalb eines Bereichs von etwa 0,005 bis etwa 2,0 phr. Ebenfalls geeignet sind beispielsweise Mengen von etwa 0,01 bis etwa 1,0 phr, beispielsweise etwa 0,02 bis etwa 0,5 phr oder beispielsweise etwa 0,05 bis etwa 0,3 phr oder weniger, beispielsweise bis etwa 0,299 phr, bezogen auf das zu stabilisierende thermoplastische Harz oder die zu stabilisierenden thermoplastischen Harze.

Zur Erzielung eines erfindungsgemäßen Effekts hat es sich bewährt, wenn der Gehalt einer erfindungsgemäßen Stabilisatorzusammensetzung an β-Diketon oder Salzen eines β-Diketons oder deren Gemischen weniger als etwa 0,1 Gew.-% beträgt. Dabei lassen sich beispielsweise Vorteile erzielen, wenn der Gehalt an β-Diketon oder Salzen eines β-Diketons oder deren Gemischen weniger als etwa 0,05 Gew.-%, weniger als etwa 0,01 Gew.-% oder weniger als etwa 0,005 Gew.-%, bezogen auf die gesamte Stabilisatorzusammensetzung, beträgt. Beispielsweise beträgt der Gehalt einer erfindungsgemäßen Stabilisatorzusammensetzungen an β-Diketon oder Salzen eines β-Diketons oder deren Gemischen weniger als etwa 1000 ppm, insbesondere weniger als etwa 500 ppm oder weniger als etwa 100 ppm oder weniger als etwa 50 ppm.

Unter β-Diketonen werden im Rahmen der vorliegenden Erfindung insbesondere Verbindungen der allgemeinen Formel I 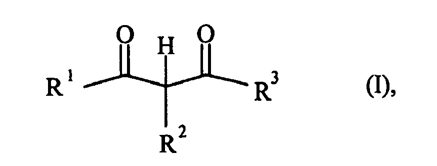 worin R¹ und R³ jeweils unabhängig voneinander für eine gegebenenfalls substituierte lineare oder verzweigte Alkyl- oder Alkenylgruppe mit 1 bis 30 Kohlenstoffatomen eine gegebenenfalls substituierte Aralkylgruppe mit 7 bis 31 C-Atomen, eine gegebenenfalls substituierte Aryl- oder Heteroarylgruppe mit 3 bis 14 C-Atomen im Ring, eine gegebenenfalls substituierte Cycloalkylgruppe mit 3 bis 18 C-Atomen oder abhängig voneinander jeweils R¹ oder R³ für O-R¹ oder HN-R¹ stehen können und R² für O-R¹ oder COOH oder eine gegebenenfalls substituierte lineare oder verzweigte Alkylgruppe mit 1 bis 24 C-Atomen steht oder jeweils R¹ oder R³ oder R¹ und R³ zusammen mit R² einen gegebenenfalls substituierten cycloaliphatischen oder heterocycloaliphatischen Ring mit unabhängig voneinander jeweils 3 bis 18 C-Atomen bilden, sowie deren Salze, verstanden.

Entsprechende Verbindungen, die unter die allgemeine Formel I fallen und deren Gehalt im Rahmen der vorliegenden Erfindung auf oder unterhalb der oben genannten Obergrenzen liegen sollte, sind beispielsweise Propionylacetylmethan, Butyroylacetylmethan, Pentanoylacetylmethan, Hexanoylacetylmethan, Heptanoylacetylmethan, Triacetylmethan, Benzoylacetylmethan, Dimedon, Acetyltetralon, Palmitoyltetralon, Stearoyltetralon, Benzoyltetralon, Acetylaceton, 2-Acetylcyclohexanon, 2-Benzoylcyclohexanon, 2-Acetylcyclohexanon-1,3-dion, Bis(4-methylbenzoyl)methan, Bis(2-hydroxybenzoyl)methan, Tribenzoylmethan, Diacetylbenzoylmethan, Stearoylbenzoylmethan, Palmitoylbenzoylmethan, Diacetylbenzoylmethan, Dibenzoylmethan, 4-Methoxybenzoylbenzoylmethan, Bis(3,4-methylendioxybenzoyl)methan, Benzoylacetyloctylmethan, Benzoylacetylphenylmethan, Stearoyl-4-methoxybenzoylmethan, Bis(4-tert.-butylbenzoyl)methan, Benzoylacetylethylmethan, Benzoyltriflouracetylmethan, Distearoylmethan, Stearoylacetylmethan, Palmitoylacetylmethan, Lauroylacetylmethan, Benzoylformylmethan, Acetylformylmethylmethan, Benzoylacetylphenylmethan, Bis(cyclohexanoyl(2))methan und dergleichen.

Als Salze dieser Verbindungen sind insbesondere die Salze mit Alkalimetallen, Erdalkalimetallen oder entsprechenden Übergangsmetallen zu nennen. Entsprechende Salze sind beispielsweise die Salze der o.g. Verbindungen mit Li, Na, K, Ba, Ca, Mg, Zn, Zr, Ti, Sn oder A1.

Im Rahmen einer weiteren Ausführungsform der vorliegenden Erfindung hat es sich als vorteilhaft herausgestellt, wenn eine erfindungsgemäße Stabilisatorzusammensetzungen im wesentlichen frei von β-Diketon oder Salzen eines β-Diketons oder deren Gemischen ist. Unter "frei von β-Diketon oder Salzen eines β-Diketons oder deren Gemischen" wird im Rahmen der vorliegenden Erfindung ein Zustand verstanden, bei dem der Stabilisatorzusammensetzung keine β-Diketone oder Salze eines β-Diketons, auch nicht in sehr geringen Mengen zugesetzt werden. Dabei liegt der Gehalt an β-Diketonen oder Salzen eines β-Diketons oder deren Gemischen beispielsweise maximal in der Größenordnung von geringen Verunreinigungen oder unterhalb der mit gängigen Analysemethoden zum Zeitpunkt der Erfindung erreichbaren Nachweisgrenzen.

Der Gehalt der Stabilisatorzusammensetzung an den Komponenten A, B und C beträgt, sofern eine erfindungsgemäße Stabilisatorzusammensetzungen eine Komponente C enthält, bezogen auf die gesamte Stabilisatorzusammensetzung, etwa 0,5 bis etwa 80 Gew.-%. Vorzugsweise beträgt der Gehalt an den Komponenten A, B und C in einem solchen Falle etwa 1 bis etwa 50 Gew.-%, beispielsweise etwa 5 bis etwa 20 Gew.-%.

Dabei liegt der Anteil an Komponente A in der Stabilisatorzusammensetzung beispielsweise im Bereich von etwa 0,5 bis etwa 30 Gew.-% vor, beispielsweise im Bereich von etwa 1 bis etwa 25 Gew.-% oder insbesondere im Bereich von etwa 5 bis etwa 20 Gew.-% oder beispielsweise im Bereich von etwa 8 bis etwa 11 Gew.-% bezogen auf das Gesamtgewicht der Stabilisatorzusammensetzung. Es hat sich ebenfalls als vorteilhaft herausgestellt, wenn der Anteil an Komponente A in der Stabilisatorzusammensetzung im Bereich von etwa 0,5 bis etwa 15 Gew.-%, beispielsweise im Bereich von etwa 1 bis etwa 10 Gew.-% oder im Bereich von etwa 1,5 bis etwa 7 Gew.-% oder im Bereich von etwa 2 bis etwa 5 Gew.-%, bezogen auf das Gesamtgewicht der Stabilisatorzusammen-setzung, liegt.

Der Anteil an Komponente B liegt in der Stabilisatorzusammensetzung beispielsweise im Bereich von etwa 0,1 bis etwa 50 Gew.-% vor, insbesondere im Bereich von etwa 1 bis etwa 30 Gew.%, insbesondere im Bereich von etwa 2 bis etwa 20 Gew.-%, insbesondere im Bereich von etwa 2,5 bis etwa 10 Gew.-%, insbesondere im Bereich von etwa 4 bis etwa 8 Gew.-%, bezogen auf das Gesamtgewicht der Stabilisatorzusammensetzung.

Der Anteil an Komponente C in der Stabilisatorzusammensetzung liegt beispielsweise im Bereich von etwa 0,1 bis etwa 20 Gew.-% vor, beispielsweise im Bereich von etwa 1 bis etwa 15 %, beispielsweise im Bereich von etwa 4 bis etwa 6 %, bezogen auf das Gesamtgewicht der Stabilisatorzusammensetzung.

Ebenfalls geeignet sind beispielsweise Mengen im Bereich von etwa 0,01 bis etwa 12 Gew.-%, beispielsweise im Bereich von etwa 0,05 bis etwa 10 Gew.-%, beispielsweise im Bereich von etwa 0,1 bis etwa 8 Gew.-%, beispielsweise im Bereich von etwa 0,15 bis etwa 5 Gew.-%, beispielsweise im Bereich von etwa 0,2 bis etwa 3 Gew.-%, bezogen auf das Gesamtgewicht der Stabilisatorzusammensetzung.

Während ein Gehalt einer erfindungsgemäßen Stabilisatorzusammensetzung an den oben genannten Komponenten A, B und gegebenenfalls C vorzugsweise innerhalb der oben genannten Grenzen bereits zu guten Stabilisierungsergebnissen bei einer überraschend guten Bewitterungsstabilität führt, hat es sich hinsichtlich einer Verbesserung der Stabilisierungswirkung weiterhin als vorteilhaft herausgestellt, wenn die erfindungsgemäße Stabilisatorzusammensetzung einen Hydrotalcit oder ein Gemisch aus zwei oder mehr Hydrotalciten enthält.

Grundsätzlich ist dabei im Rahmen der vorliegenden Erfindung jede Art von Hydrotalciten geeignet, die hinsichtlich der Verarbeitungseigenschaften und/oder der Stabilisierung eines halogenhaltigen Polymeren im Rahmen einer erfindungsgemäßen Stabilisatorzusammensetzungen zumindest keinen oder jedenfalls im wesentlichen keinen nachteiligen Einfluss zeigt. Darüber hinaus sind besonders solche Hydrotalcite bevorzugt, welche die Lagerstabilität einer erfindungsgemäßen Stabilisatorzusammensetzung nicht nachteilig beeinflussen. Besonders geeignet sind beispielsweise Hydrotalcite wie sie in den Druckschriften WO 96/02465 A1 (insbesondere S. 3 bis 7 und Beispiele), EP 0 189 899 (insbesondere S. 10 - 15, Tabellen 2 bis 10), DE 38 43 581 (insbesondere S. 4), US 4,883,533 (insbesondere Sp. 2 - 4, Beispiele), EP 0 407 139 A2 (insbesondere S. 2 - 3, Beispiele), DE 40 31 818 A1 (insbesondere S. 2 - 3), DE 41 10 835 A1 (insbesondere Sp. 2 - 5, Beispiele) , DE 41 17 034 A1 (insbesondere S. 2 - 6, Beispiele), EP 0 522 810 A2 (insbesondere S. 2 - 3), DE 44 39 934 A1 (insbesondere S. 2 - 3, Beispiele) und US 5,352,723 (insbesondere Sp. 2 - 3, Beispiele) beschrieben werden. Auf die Offenbarung der oben genannten Druckschriften, insbesondere auf die Offenbarung an den genannten Stellen wird dabei ausdrücklich verwiesen, wobei die entsprechende Offenbarung der Druckschriften als Bestandteil der Offenbarung des vorliegenden Texts verstanden wird.

Es hat sich dabei erfindungsgemäß gezeigt, dass insbesondere ein Gehalt an Hydrotalcit innerhalb relativ enger Grenzen, welche innerhalb eines Bereich von etwa 0,05 bis etwa 0,25 phr, bezogen auf die Menge an zu stabilisierendem halogenhaltigen Polymeren, dem erfindungsgemäßen Gehalt an Komponenten A und B oder A, B und C im Hinblick auf einer besonders gute Verarbeitbarkeit und gute Stabilisierungsergebnisse unterstützt. Im Rahmen einer bevorzugten Ausführungsform der vorliegenden Erfindung enthält daher eine erfindungsgemäße Stabilisatorzusammensetzung einen Hydrotalcit oder ein Gemisch aus zwei oder mehr Hydrotalciten in einer Menge von etwa 0,08 bis etwa 1,8 phr, beispielsweise in einer Menge von etwa 0,1 bis etwa 0,15 phr.

Es hat sich weiterhin als vorteilhaft herausgestellt, wenn eine erfindungsgemäße Stabilisatorzusammensetzung mindestens ein Zinksalz, vorzugsweise ein Zinksalz einer organischen Carbonsäure oder ein Gemisch aus zwei oder mehr davon enthält. Es ist darüber hinaus erfindungsgemäß möglich, dass eine erfindungsgemäße Stabilisatorzusammensetzung ein Gemisch aus mindestens einem Zinksalz einer organischen Carbonsäure mit 16 C-Atomen oder mehr und mindestens einem Zinksalz einer organischen Carbonsäure mit weniger als 16 C-Atomen enthält.

Geeignete organischen Carbonsäuren sind beispielsweise Capronsäure, Caprylsäure, Caprinsäure, Laurinsäure, Myristinsäure, Önanthsäure, Octansäure, Neodecansäure, 2-Ethylhexansäure, Pelargonsäure, Decansäure, Undecansäure, Dodecansäure, Tridecansäure, Palmitinsäure, Laurylsäure, Linolsäure, Linolensäure, Erucasäure, Isostearinsäure, Stearinsäure, 12-Hydroxystearinsäure, 9,10-Dihydroxystearinsäure, Ölsäure, 3,6-Dioxaheptansäure, 3,6,9-Trioxadecansäure oder Behensäure.

Wenn eine erfindungsgemäße Stabilisatorzusammensetzung ein Gemisch aus mindestens einem Zinksalz einer organischen Carbonsäure mit 16 C-Atomen oder mehr und mindestens einem Zinksalz einer organischen Carbonsäure mit weniger als 16 C-Atomen enthält, so beträgt das Verhältnis von Zn-Salz oder Gemisch aus zwei odermehr Zn-Salzen von Carbonsäuren mit 16 C-Atomen oder mehr zu Zn-Salz oder einem Gemisch aus zwei oder mehr Zn-Salzen von Carbonsäuren mit weniger als 16 C Atomen vorteilhafterweise etwa 1 : 100 bis etwa 100 : 1, insbesondere etwa 1:10 bis etwa 10 : 1.

Im Rahmen einer bevorzugten Ausführungsform der vorliegenden Erfindung enthält eine erfindungsgemäße Stabilisatorzusammensetzung ein Gemisch aus Zinkstearat und mindestens einem weiteren organischen Zinksalz, wobei das mindestens eine weitere organische Zn-Salz beispielsweise ein Zn-Salz einer organischen Carbonsäure mit weniger als 16 C-Atomen oder ein Zinksalz einer substituierten Carbonsäure, insbesondere einer mit Hydroxygruppen substituierten Carbonsäure, ist. Geeignete Gemische stellen dabei beispielsweise die Gemische von Zn-Stearat und Zn-Caprylat oder von Zn-Stearat und Zn-12-Hydroxystearat dar.

Vorzugsweise beträgt der Anteil eines Gemischs aus zwei oder mehr der oben genannten Zn-Salze an der erfindungsgemäßen Stabilisatorzusammensetzung etwa 0,1 bis etwa 5 phr, bezogen auf die Menge an zu stabilisierendem halogenhaltigen Polymeren, beispielsweise etwa 0,2 bis etwa 2 phr oder etwa 0,8 bis etwa 1,2 phr.

Es hat sich weiterhin für die Verarbeitungs- und Stabilisierungseigenschaften der vorliegenden erfindungsgemäßen Stabilisatorzusammensetzung als vorteilhaft herausgestellt, wenn die Stabilisatorzusammensetzung ein Triglycerid enthält. Geeignete Triglyceride sind diesem Zusammenhang alle Triglyceride welche die Verarbeitungseigenschaften einer Polymerzusammensetzung, welche eine erfindungsgemäße Stabilisatorzusammensetzung enthält, zumindest nicht nachteilig beeinflussen.

Geeignete Triglyceride sind beispielsweise natürliche oder synthetische Fette. Es hat sich erfindungsgemäß herausgestellt, dass die Verwendung von Triglyceriden zusammen mit den oben genannten Verbindungen in einer erfindungsgemäßen Stabilisatorzusammensetzung zu einer Verbesserung der Oberflächenstruktur bei der Extrusion führt. Weitere vorteilhafte Effekte sind eine gute Hydrolysebeständigkeit, schnelle Gelierung, Bindungsfähigkeit für große Mengen an Füllstoffen, kein plate-out Effekt.

Besonders geeignet sind dabei Glycerinstearate wie gereinigter Rindertalg, gehärteter Rindertalg, gereinigtes bzw. gehärtetes Fischöl oder Glycerin(tri-12-hydroxystearate) wie gehärtetes Rizinusöl oder Gemische aus zwei oder mehr der genannten Verbindungen. Besonders geeignet sind gehärteter Rindertalg bzw. gehärtetes Rizinusöl.

Die erfindungsgemäße Stabilsiatorkombination kann zusätzlich mindestens einen weiteren Zusatzstoff oder ein Gemisch aus zwei oder mehr der genannten Zusatzstoffe enthalten. Die nachfolgend genannten Zusatzstoffe können erfindungsgemäß in einer Menge von insgesamt etwa 2 bis etwa 99,9 Gew.-%, bezogen auf die gesamte Stabilisatorzusammensetzung, enthalten sein.

Ebenfalls als Zusatzstoffe geeignet sind beispielsweise weitere Aminoalkohole. Als Aminoalkohole sind im Rahmen der vorliegende Erfindung grundsätzlich alle Verbindungen geeignet, die mindestens eine OH-Gruppe und eine primäre, sekundäre oder tertiäre Aminogruppe oder eine Kombination aus zwei oder mehr der genannten Aminogruppen aufweisen. Grundsätzlich sind im Rahmen der vorliegenden Erfindung sowohl feste als auch flüssige Aminoalkohole als Bestandteil der erfindungsgemäßen Stabilisatorzusammensetzungen geeignet. Im Rahmen der vorliegenden Erfindung wird der Anteil an flüssigen Aminoalkoholen jedoch beispielsweise so gewählt, dass die gesamte Stabilisatorzusammensetzung im Wesentlichen in fester Form vorliegt.

Im Rahmen der vorliegenden Erfindung einsetzbare Aminoalkohole weisen im Rahmen einer bevorzugten Ausführungsform der vorliegenden Erfindung einen Schmelzpunkt von mehr als etwa 30 °C, insbesondere mehr als etwa 50 °C auf. Geeignete Aminoalkohole sind beispielsweise Mono- oder Polyhydroxyverbindungen die auf linearen oder verzweigten, gesättigten oder ungesättigten aliphatischen Mono- oder Polyaminen aufbauen.

Hierzu geeignet sind beispielsweise OH-Gruppen tragende Derivate primärer Mono- oder Polyaminoverbindungen mit 2 bis etwa 40, beispielsweise 6 bis etwa 20 C-Atomen. Beispielsweise sind dies entsprechende OH-Gruppen tragende Derivate von Ethylamin, n-Propylamin, i-Propylamin, n-Propylamin, sek.-Propylamin, tert.-Butylamin, 1-Aminoisobutan, substituierten Aminen mit zwei bis etwa 20 C-Atomen wie 2-(N,N-Dimethylamino)-1-aminoethan. Geeignete OH-Gruppen tragende Derivate von Diaminen sind beispielsweise solche, die auf Diaminen mit einem Molekulargewicht von etwa 32 bis etwa 200 g/mol aufbauen, wobei die entsprechenden Diamine mindestens zwei primäre, zwei sekundäre oder eine primäre und eine sekundäre Aminogruppe aufweisen. Beispiele hierfür sind Diaminoethan, die isomeren Diaminopropane, die isomeren Diaminobutane, die isomeren Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie die Diethylentriamin oder 1,8-Diamino-4-aminomethyloctan. Triethylamin, Tributylamin, Dimethylbenzylamin, N-Ethyl-, N-Methyl-, N-Cyclohexylmorpholin, Dimethylcyclohexylamin, Dimorpholinodiethylether, 1,4-Diazabicyclo[2,2,2]octan, 1-Azabicyclo[3,3,0]octan, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol oder Di-(4-N,N-dimethylaminocyclohexyl)-methan.

Besonders geeignet sind aliphatische Aminoalkohole mit 2 bis etwa 40, vorzugsweise 6 bis etwa 20 C-Atomen, beispielsweise 1-Amino-3,3-dimethyl-pentan-5-ol, 2-Aminohexan-2',2"-diethanolamin, 1-Amino-2,5-dimethylcyclohexan-4-ol- 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, 2-(Dimethylaminoethoxy)-ethanol, aromatisch-aliphatische oder aromatisch-cycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol sowie Gemische aus zwei oder mehr solcher Verbindungen in Betracht kommen.

Ebenfalls als Zusatzstoffe im Rahmen der vorliegenden Erfindung geeignet sind Verbindungen mit einem Strukturelement der allgemeinen Formel III 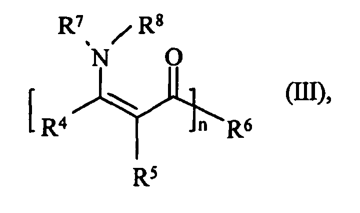 worin n für eine Zahl von 1 bis 100.000, die Reste R⁷, R⁸, R⁴ und R⁵ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest R⁴ für einen gegebenenfalls substituierten Acylrest mit 2 bis 44 C-Atomen steht oder die Reste R⁴ und R⁵ zu einem aromatischen oder heterocyclischen System verbunden sind und worin der Rest R⁶ für Wasserstoff, einen gegebenenfalls substituierten, linearen oder verzweigten, gesättigten oder ungesättigten aliphatischen Alkyl- oder Alkylenrest oder Oxyalkyl- oder Oxyalkylenrest oder Mercaptoalkyl- oder Mercaptoalkylenrest oder Aminoalkyl- oder Aminoalkylenrest mit 1 bis 44 C-Atomen, einen gegebenenfalls substituierten gesättigten oder ungesättigten Cycloalkyl- oder Cycloalkylenrest oder Oxycycloalkyl- oder Oxycycloalkylenrest oder Mercaptocycloalkyl- oder Mercaptocycloalkylenrest oder Aminocycloalkyl- oder Aminocycloalkylenrest mit 6 bis 44 C-Atomen oder einen gegebenenfalls substituierten Aryl-oder Arylenrest mit 6 bis 44 C-Atomen oder einen Ether- oder Thioetherrest mit 1 bis 20 O- oder S-Atomen oder O- und S-Atomen oder für ein Polymeres, das über O, S, NH, NR⁴ oder CH₂C(O) mit dem in Klammern stehenden Strukturelement verbunden ist, steht oder der Rest R⁶ mit dem Rest R⁴ so verbunden ist, dass insgesamt ein gegebenenfalls substituiertes, gesättigtes oder ungesättigtes heterocyclisches Ringsystem mit 4 bis 24 C-Atomen gebildet wird, oder ein Gemisch aus zwei oder mehr Verbindungen der allgemeinen Formel III, enthalten.

Im Rahmen einer bevorzugten Ausführungsform der vorliegenden Erfindung wird als Verbindung der allgemeinen Formel III eine auf einer α,β-ungesättigten β-Aminocarbonsäure, insbesondere eine auf β-Arninocrotonsäure basierende Verbindung eingesetzt. Besonders geeignet sind hierbei die Ester oder Thioester der entsprechenden Aminocarbonsäuren mit einwertigen oder mehrwertigen Alkoholen oder Mercaptanen.

Eine genaue Beschreibung der im Rahmen der vorliegenden Erfindung einsetzbaren Verbindungen der allgemeinen Formel III findet sich in der WO 02/068526 auf den Seiten 7 bis 10, wobei auf diese Druckschrift sowie die entsprechende Offenbarung ausdrücklich verwiesen wird und die Offenbarung als Bestandteil der Offenbarung des vorliegenden Textes betrachtet wird.

Ebenfalls als Zusatzstoffe geeignet sind Verbindungen mit mindestens einem mercaptofunktionellen sp²-hybridisierten C-Atom, wie sie in der WO 02/068526 auf den Seiten 10 bis 11 beschrieben werden. Auf diese Druckschrift sowie die entsprechende Offenbarung wird ausdrücklich verwiesen und die Offenbarung wird als Bestandteil der Offenbarung des vorliegenden Textes betrachtet.

Eine erfindungsgemäße Stabilisatorzusammensetzung kann weiterhin Füllstoffe, wie sie im "Handbook of PVC Formulating", E. J. Wickson, John Wiley & Sons, Inc., 1993, auf den Seiten 393-449 beschrieben sind, beispielsweise Kreide oder Verstärkungsmittel, wie sie im "Taschenbuch der Kunststoffadditive", R. Gächter/H. Müller, Carl Hanser Verlag, 1990, Seiten 549-615 beschrieben sind, oder Pigmente enthalten.

Ebenfalls als Zusatzstoffe geeignet sind Salze halogenhaltiger Oxysäuren, insbesondere Perchlorat. Beispiele für geeignete Perchlorate sind diejenigen der allgemeinen Formel M(ClO₄)ₙ, wobei M für Li, Na, K, Mg, Ca, Sr, Zn, Al, La oder Ce steht. Der Index n steht entsprechend der Wertigkeit von M für die Zahl 1, 2 oder 3. Die genannten Perchloratsalze können mit Alkoholen (Polyole, Zyklodextrine) oder Etheralkoholen beziehungsweise Esteralkoholen komplexiert sein. Zu den Esteralkoholen sind auch die Polyolpartialester zu zählen. Bei mehrwertigen Alkoholen oder Polyolen kommen auch deren Dimere, Trimere, Oligomere und Polymere in Frage, wie Di-, Tri-, Tetra- und Polyglykole sowie Di-, Tri- und Tetrapentaerythrit oder Polyvinylalkohol in verschiedenen Polymerisations- und Verseifungsgraden. Als Polyolpartialester sind Glycerinmonoether und Glycerinmonothioether bevorzugt. Ebenfalls geeignet sind Zuckeralkohole oder Thiozucker.

Die Perchloratsalze können dabei in verschiedenen gängigen Darreichungsformen eingesetzt werden, beispielsweise als Salz oder wässrige Lösung, aufgezogen auf ein geeignetes Trägermaterial wie PVC, Calciumsilikat, Zeolithe, Calciumhydroxid, Calciumoxid oder Hydrotalcite oder eingebunden durch chemische Reaktion in einen Hydrotalcit. Hinsichtlich auf Calciumoxid oder Calciumhydroxid aufgezogener Perchloratverbindungen wird ausdrücklich auf die DE 101 24 734 A1 verwiesen, wobei die Offenbarung dieser Druckschrift hinsichtlich geträgerter Perchlorate als Bestandteil der Offenbarung des vorliegenden Textes betrachtet wird.

Ebenfalls als Zusatzstoffe geeignet sind beispielsweise basische Calcium-Aluminium-Hydroxyphosphite der allgemeinen Formel (IV)

CaₓAl₂(OH)_{2(x+3-y)}(HPO₃)_{y} • m H₂O (IV),

worin 2 ≤ x ≤ 12, (2x+5)/2 > y > 0 und 0 ≤ m ≤ 12 gilt. Verbindungen der allgemeinen Formel (IV) werden z. B. in der DE 41 06 411 A beschrieben. Weitere basische Calcium-Aluminium-Hydroxyphosphite werden in DE- A-3941902 beschrieben. Auf die Offenbarung der genannten Druckschriften hinsichtlich basischer Calcium-Aluminium-Hydroxyphosphite wird ausdrücklich verwiesen. Die Offenbarung wird als Bestandteil der Offenbarung des vorliegenden Textes betrachtet.

Ebenfalls als Zusatzstoffe im Rahmen der erfindungsgemäßen Stabilisatorzusammensetzungen geeignet sind basische Calcium-Aluminium-Hydroxycarboxylaten der allgemeinen Formel V

CaₓAl₂(OH)_{[(2x+6)-y]}A_{y/n}ⁿ⁻ * m H₂O (V),

worin 2≤x≤12, (2x+5)/2 > y > 0, 0 ≤ m ≤ 12 und 1 ≤ n ≤ 8 gilt, und Aⁿ⁻ für ein aliphatisches gesättigtes, ungesättigtes, geradkettiges oder verzweigtes ein- oder mehrfunktionelles Carbonsäureanion mit 1 bis 22 Kohlenstoffatomen oder für ein aromatisches oder heteroaromatisches ein- oder mehrfunktionells Carbonsäureanion mit 6 bis 20 Kohlenstoffatomen steht.

Das Carbonsäureanion Aⁿ⁻ in der allgemeinen Formel (V) kann beispielsweise ausgewählt werden aus Anionen der Malon-, Bernstein-, Adipin-, Fumar-, Malein-, Phthal-, Isophthal-, Terephthal-, Pyridin-, Benzoe-, Salicyl-, Tartron-, Äpfel-, Wein-, Acetondicarbon-, Oxalessig-, Aconit- und Zitronensäure. Bevorzugt sind die Anionen der Fumar- und Phthalsäure, insbesondere werden Fumarate eingesetzt.

Verbindungen der allgemeinen Formel (V) sind z.B. aus DE 41 06 404 A bekannt. Weitere Calcium-Aluminium-Hydroxicarboxylate werden in DE 40 02 988 A beschrieben, wobei auf die Offenbarung dieser Druckschriften hinsichtlich der genannten Calcium-Aluminium-Hydroxycarboxylate ausdrücklich hingewiesen wird und deren Offenbarung als Bestandteil der Offenbarung des vorliegenden Textes gilt.

Weiterhin als Zusatzstoffe im Rahmen der erfindungsgemäßen Stabilisatorzusammensetzung geeignet sind Polyole. Geeignete Polyole sind beispielsweise Pentaerythrit, Dipentaerythrit, Tripentaerythrit, Bistrimethylolpropan, Inosit, Polyvinylalkohol, Bistrimetylolethan, Trimethylolpropan, Sorbit, Maltit, Isomaltit, Lactit, Lycasin, Mannit, Lactose, Leucrose, Palatinit, Tetramethylolcyclohexanol, Tetramethylolcyclopentanol, Tetramethylolcycloheptanol, Glyzerin, Diglyzerin, Polyglyzerin, Thiodiglyzerin oder 1-0-α-D-Glycopyranosyl-D-mannit-dihydrat.

Ebenfalls als Zusatzstoffe geeignet sind beispielsweise Epoxyverbindungen. Beispiele für derartige Epoxyverbindungen sind epoxidiertes Sojaöl, epoxidiertes Olivenöl, epoxidiertes Leinöl, epoxidiertes Rizinusöl, epoxidiertes Erdnussöl, epoxidiertes Maisöl, epoxidiertes Baumwollsamenöl sowie Glycidylverbindungen. Als Glycidylverbindungen eignen sich insbesondere die Glycidylverbindungen wie sie in der WO 02/068526 auf den Seiten 20 bis 22 beschrieben werden. Auf die Offenbarung der genannten Druckschrift hinsichtlich der Glycidylverbindungen wird ausdrücklich verwiesen und sie wird als Bestandteil der Offenbarung des vorliegenden Textes betrachtet.

Besonders geeignete Epoxyverbindungen sind beispielsweise in der EP-A 1 046 668 auf den Seiten 3 bis 5 beschrieben, wobei auf die dort enthaltene Offenbarung ausdrücklich Bezug genommen wird und die als Bestandteil der Offenbarung des vorliegenden Textes betrachtet wird.

Weiterhin als Zusatzstoffe geeignet sind beispielsweise Zeolithe, die durch die allgemeine Formel Mₓⁿ[(AlO₂)ₓ(SiO₂)_{y}] * m H₂O beschrieben werden können, worin n für die Ladung des Kations M (z.B. Alkali - oder Erdalkalimetall) steht, 0,8 ≤ x, y ≤ 15 und 0 ≤ m ≤ 300 gilt.

Ebenfalls als Zusatzstoffe geeignet sind beispielsweise sterisch gehinderte Amine wie sie in der EP-A 1 046 668 auf den Seiten 7 bis 27 genannt werden. Auf die dort offenbarten sterisch gehinderten Amine wird ausdrücklich Bezug genommen, die dort genannten Verbindungen werden als Bestandteil der Offenbarung des vorliegenden Textes betrachtet.

Ebenfalls als Zusatzstoffe geeignet sind Uracile und Aminouracile, wie sie beispielsweise in der EP 1 046 668 genannt werden. Die sich auf Aminouracile beziehende Offenbarung der genannten Druckschrift wird als Bestandteil der Offenbarung des vorliegenden Textes betrachtet.

Weiterhin eignen sich als Zusatzstoffe Aminosäuren und deren Alkali - und Erdalkalisalze.

Ebenfalls als Zusatzstoffe geeignet sind Hydrocalumite der allgemeinen Formel AlCaₓ(OH)₂ₓ₊₃ * m H₂O; x = 1 bis 4; m = 0 bis 8, die beispielsweise in der DE 41 03 881 beschrieben werden. Auf die genannte Druckschrift und deren Offenbarung hinsichtlich der genannten Hydrocalumite wird ausdrücklich Bezug genommen und die Offenbarung wird als Bestandteil der Offenbarung des vorliegenden Textes betrachtet.

Eine erfindungsgemäße Stabilisatorzusammensetzung kann darüber hinaus weiterhin als Zusatzstoff eine Organozinnverbindung oder ein Gemisch aus zwei oder mehr Organozinnverbindungen enthalten. Geeignete Organozinnverbindungen sind beispielsweise Methylzinn-tris-(isooctyl-thioglycolat), Methylzinn-tris-(isooctyl-3-mercaptopropionat), Methylzinn-tris-(isodecyl-thioglycolat), Dimethylzinn-bis-(isooctyl-thioglycolat), Dibutylzinn-bis-(isooctyl-thioglycolat), Monobutylzinn-tris-(isooctyl-thioglycolat), Dioctylzinn-bis-(isooctyl-thioglycolat), Monooctylzinn-tris-(isooctyl-thioglycolat) oder Dimethylzinn-bis-(2-ethylhexyl-β-mercaptopropionat).

Darüber hinaus sind im Rahmen der erfindungsgemäßen Stabilisatorzusammensetzungen die in der EP-A 0 742 259 auf den Seiten bis 18 bis 29 genannten und in ihrer Herstellung beschriebenen Organozinnverbindungen einsetzbar. Auf die oben genannte Offenbarung wird ausdrücklich Bezug genommen, wobei die dort genannten Verbindungen und deren Herstellung als Bestandteil der Offenbarung des vorliegenden Textes verstanden werden. Ebenfalls als Additive geeignet sind latente Mercaptane, wie sie in der EP 0 742 259 A1 und der EP 1 201 706 A1 beschrieben werden, sowie Cyanacetylharnstoffe gemäß der DE 299 24 285 U1, wobei auf die oben genannten Offenbarungsstellen ausdrücklich Bezug genommen wird und die dort genannten Verbindungen und deren Herstellung als Bestandteil der Offenbarung des vorliegenden Textes verstanden werden.

Im Rahmen einer weiteren Ausführungsform der vorliegenden Erfindung kann eine erfindungsgemäße Stabilisatorzusammensetzung organische Phosphitester mit 1 bis 3 identischen, paarweise identischen oder unterschiedlichen organischen Resten enthalten. Geeignete organische Reste sind beispielsweise lineare oder verzweigte, gesättigte oder ungesättigte Alkylreste mit 1 bis 24 C-Atomen, gegebenenfalls substituierten Alkylreste mit 6 bis 20 C-Atomen oder gegebenenfalls substituierte Aralkylreste mit 7 bis 20 C-Atomen. Beispiele für geeignete organische Phosphitester sind Tris-(nonylphenyl)-, Trilauryl-, Tributyl-, Trioctyl-, Tridecyl-, Tridodecyl-, Triphenyl-, Octyldiphenyl-, Dioctylphenyl-, Tri-(Octylphenyl)-, Tribenzyl-, Butyldikresyl-, Octyl-di(octylphenyl)-, Tris-(2-ethylhexyl)-, Tritolyl-, Tris-(2-cyclohexylphenyl)-, Tri-α-naphthyl-, Tris-(phenylphenyl)-, Tris-(2-phenylethyl)-, Tris-(dimethylphenyl)-, Trikresyl- oder Tris-(p-nonylphenyl)-phosphit oder Tristearyl-sorbit-triphosphit oder Gemische aus zwei oder mehr davon.

Eine erfindungsgemäße Stabilisatorzusammensetzung kann weiterhin Gleitmittel wie Montanwachs, Fettsäureester, Polyethylenwachse, Amidwachse, Chlorparaffine oder Erdalkaliseifen enthalten. Als Zusatzstoffe verwendbare Gleitmittel werden darüber hinaus auch in "Kunststoffadditive", R. Gächter/H. Müller, Carl Hanser Verlag, 3. Auflage, 1989, S. 478 - 488 beschrieben. Weiterhin als Zusatzstoffe geeignet sind beispielsweise Fettketone wie sie in der DE 4,204,887 beschrieben werden sowie Gleitmittel auf Silikonbasis, wie sie beispielsweise die EP-A 0 259 783 nennt, oder Kombinationen davon, wie sie in der EP-A 0 259 783 genannt werden. Auf die genannten Dokumente wird hiermit ausdrücklich Bezug genommen, deren Gleitmittel betreffende Offenbarung wird als Bestandteil der Offenbarung des vorliegenden Textes betrachtet.

Ebenfalls als Zusatzstoffe für Stabilisatorzusammensetzungen gemäß der vorliegenden Erfindung geeignet sind organische Weichmacher.

Als entsprechende Weichmacher geeignet sind beispielsweise die oben im Rahmen der Beschreibung der Lösemittel genannten Verbindungen aus der Gruppe der Phthalsäureester wie Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Dicyclohexyl-, Di-methylcyclohexyl-, Dimethylglykol-, Dibutylglykol-, Benzylbutyl- oder Diphenylphthalat sowie Gemische von Phthalaten, beispielsweise Gemische von Alkylphthalaten mit 7 bis 9 oder 9 bis 11 C-Atomen im Esteralkohol oder Gemische von Alkylphthalaten mit 6 bis 10 und 8 bis 10 C-Atomen im Esteralkohol. Besonders im Sinne der vorliegenden Erfindung geeignet sind dabei Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutylphthalat sowie die genannten Mischungen von Alkylphthalaten.

Weiterhin als Weichmacher geeignet sind die Ester aliphatischer Dicarbonsäuren, insbesondere die Ester von Adipin-, Azelain- oder Sebacinsäure oder Gemische aus zwei oder mehr davon. Beispiele für derartige Weichmacher sind Di-2-ethylhexyladipat, Di-isooctyladipat, Di-iso-nonyladipat, Di-iso-decyladipat, Benzylbutyladipat, Benzyloctyladipat, Di-2-ethylhexylazelat, Di-2-ethylhexylsebacat und Di-iso-decylsebacat. Bevorzugt sind im Rahmen einer weiteren Ausführungsform der vorliegenden Erfindung Di-2-ethylhexylacetat und Di-iso-octyladipat.

Ebenfalls als Weichmacher geeignet sind Trimellithsäureester wie Tri-2-ethylhexyltrimellithat,Tri-iso-tridecyltrimellithat, Tri-iso-octyltrimellithat sowie Trimellithsäureester mit 6 bis 8, 6 bis 10, 7 bis 9 oder 9 bis 11 C-Atomen in der Estergruppe oder Gemische aus zwei oder mehr der genannten Verbindungen.

Weiterhin geeignete Weichmacher sind beispielsweise Polymerweichmacher, wie sie in "Kunststoffadditive", R. Gächter/H. Müller, Carl Hanser Verlag, 3. Auflage, 1989, Kapitel 5.9.6, Seiten 412-415, oder "PVC Technology", W. V. Titow, 4th Edition, Elsevier Publishers, 1984, Seiten 165-170, angegeben sind. Die gebräuchlichsten Ausgangsmaterialien für die Herstellung von Polyesterweichmachem sind beispielsweise Dicarbonsäuren wie Adipin-, Phthal-, Azelain- oder Sebacinsäure sowie Diole wie 1,2-Propandiol, 1,3-Butandiol, 1,4-Butandiol, 1,6-Hexandiol, Neopentylglykol oder Diethylenglykol oder Gemische aus zwei oder mehr davon.

Ebenfalls als Weichmacher geeignet sind Phosphorsäureester, wie sie im "Taschenbuch der Kunststoffadditive", Kapitel 5.9.5, S. 408-412 zu finden sind. Beispiele für geeignete Phosphorsäureester sind Tributylphosphat, Tri-2-ethylbutylphosphat, Tri-2-ethylhexylphosphat, Trichlorethylphosphat, 2-Ethylhexyl-di-phenylphosphat, Triphenylphosphat, Trikresylphosphat oder Trixylenylphosphat, oder Gemische aus zwei oder mehr davon.

Weiterhin als Weichmacher geeignet sind chlorierte Kohlenwasserstoffe (Paraffine) oder Kohlenwasserstoffe wie sie in "Kunststoffadditive", R. Gächter/H. Müller, Carl Hanser Verlag, 3. Auflage, 1989, Kapitel 5.9.14.2, S. 422-425 und Kapitel 5.9.14.1, S. 422, beschrieben sind.

Im Rahmen einer weiteren Ausführungsform der vorliegenden Erfindung können die erfindungsgemäßen Stabilisatorzusammensetzungen Antioxidantien, UV-Absorber und Lichtschutzmittel oder Treibmittel enthalten. Geeignete Antioxidantien sind beispielsweise in der EP-A 1 046 668 auf den Seiten 33 bis 35 beschrieben. Geeignete UV-Absorber und Lichtschutzmittel sind dort auf den Seiten 35 und 36 genannt. Auf beide Offenbarungsstellen wird hier ausdrücklich Bezug genommen, wobei die Offenbarungsstellen als Bestandteil des vorliegenden Textes betrachtet werden.

Als Treibmittel eignen sich beispielsweise organische Azo- und Hydrazoverbindungen, Tetrazole, Oxazine, Isatosäureanhydrid, Salze der Citronensäure, beispielsweise Ammoniumcitrat, sowie Soda und Natriumbicarbonat. Besonders geeignet sind beispielsweise Ammoniumcitrat, Azodicarbonamid oder Natriumbicarbonat oder Gemische aus zwei oder mehr davon.

Eine erfindungsgemäße Stabilisatorzusammensetzung kann darüber hinaus noch Schlagzähmodifikatoren und Verarbeitungshilfen, Geliermittel, Antistatika, Biozide, Metalldesaktivatoren, optische Aufheller, Flammschutzmittel sowie Antifoggingverbindungen enthalten. Geeignete Verbindungen dieser Verbindungsklassen sind beispielsweise in "Kunststoff Additive", R. Keßler/H. Müller, Carl Hanser Verlag, 3. Auflage, 1989 sowie im "Handbook of PVC Formulating", E.J. Wilson, J. Wiley & Sons, 1993 beschrieben.

Eine erfindungsgemäße Stabilisatorzusammensetzung lässt sich grundsätzlich auf beliebige Weise durch Vermischen der einzelnen Komponenten herstellen.

Die erfindungsgemäßen Stabilisatorzusammensetzungen eignen sich zur Stabilisierung halogenhaltiger Polymerer.

Beispiele für derartige halogenhaltige Polymere sind Polymere des Vinylchlorids, Vinylharze, die Vinylchlorideinheiten im Polymerrückgrat enthalten, Copolymere von Vinylchlorid und Vinylestern aliphatischer Säuren, insbesondere Vinylacetat, Copolymere von Vinylchlorid mit Estern der Acryl- und Methacrylsäure oder Acrylnitril oder Gemische aus zwei oder mehr davon, Copolymere des Vinylchlorids mit Dienverbindungen oder ungesättigten Dicarbonsäuren oder deren Anhydriden, beispielsweise Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen Verbindungen wie Acrolein, Crotonaldehyd, Vinylmethylketon, Vinylmethylether, Vinylisobutylether und dergleichen, Polymere und Copolymere des Vinylidenchlorids mit Vinylchlorid und anderen polymerisierbaren Verbindungen, wie sie bereits oben genannt wurden, Polymere des Vinylchloracetats und Dichlordivinylethers, chlorierte Polymere des Vinylacetats, chlorierte polymere Ester der Acrylsäure und der α-substituierten Acrylsäuren, chlorierte Polystyrole, beispielsweise Polydichlorstyrol, chlorierte Polymere des Ethylens, Polymere und nachchlorierte Polymere von Chlorbutadien und deren Copolymere mit Vinylchlorid sowie Mischungen aus zwei oder mehr der genannten Polymeren oder Polymermischungen, die eines oder mehrere der oben genannten Polymere enthalten. Im Rahmen einer bevorzugten Ausführungsform der vorliegenden Erfindung werden die erfindungsgemäßen Stabilisatorzusammensetzungen zur Herstellung von Formteilen aus PVC-U wie Fensterprofilen, technischen Profilen, Rohren und Platten eingesetzt.

Ebenfalls zur Stabilisierung mit den erfindungsgemäßen Stabilisatorzusammensetzungen geeignet sind die Pfropfpolymerisate von PVC mit EVA, ABS oder MBS. Bevorzugte Substrate für derartige Propfcopolymere sind außerdem die vorstehend genannten Homo- und Copolymerisate, insbesondere Mischungen von Vinylchlorid-Homopolymerisaten mit anderen thermoplastischen oder elastomeren Polymeren, insbesondere Blends mit ABS, MBS, NBR, SAN, EVA, CPE, MBAS, PAA (Polyalkylacrylat), PAMA (Polyalkylmethacrylat), EPDM, Polyamiden oder Polylactonen.

Ebenfalls zur Stabilisierung mit den erfindungsgemäßen Stabilisatorzusammensetzungen geeignet sind Gemische von halogenierten und nicht-halogenierten Polymeren, beispielsweise Gemische der oben genannten nicht-halogenierten Polymeren mit PVC, insbesondere Gemische von Polyurethanen und PVC.

Weiterhin können mit den erfindungsgemäßen Stabilisatorzusammensetzungen auch Rezyklate chlorhaltiger Polymere stabilisiert werden, wobei grundsätzlich alle Rezyklate der oben genannten, halogenierten Polymeren hierzu geeignet sind. Geeignet ist im Rahmen der vorliegenden Erfindung beispielsweise PVC-Rezyklat.

Die erfindungsgemäße Stabilisatorzusammensetzung wird bevorzugt für Polyvinylchlorid (PVC) als halogenhaltiges thermoplastisches Harz verwendet. Beispielsweise wird sie für PVC-U (Hart-PVC) eingesetzt. Der hierin verwendete Begriff Polyvinylchlorid umfaßt dabei gebräuchliche Homo- und Copolymerisate von Vinylchlorid sowie Abmischungen solcher Polyvinylchloridverbindungen mit anderen Polymermassen. Derartige Polymerisate können auf beliebigen Wegen, beispielsweise durch Suspensions-, Emulsions- oder Blockpolymerisation hergestellt worden sein. Ihr K-Wert kann beispielsweise zwischen 50 und 100 liegen.

Es hat sich gezeigt, dass durch Verwendung einer erfindungsgemäßen Stabilsatorkombination insbesondere Formkörper aus PVC-U für Außenanwendungen hergestellt werden können, die eine unerwartet hohe Bewitterungs- und Thermostabilität aufweisen sowie ausgezeichnete Verarbeitungseigenschaften zeigen.

Ein weiterer Gegenstand der vorliegenden Erfindung betrifft daher eine Polymerzusammensetzung, enthaltend eine Stabilisatorzusammensetzung, einen Farbstoff oder ein Pigment oder beides, wobei der Farbstoff oder das Pigment einem halogenhaltigen thermoplastischen Harz den Farbwert von L ≤ 95, a = 0 ± > 1 oder b = 0 ± >1 oder a = 0 ± > 1 und b = 0 ± > 1 verleiht, wobei der Farbwert im Lab-System mit der Lichtart D65 gemessen wird, und mindestens ein Polymeres, wobei als Stabilisatorzusammensetzung mindestens eine stabilisierende Calciumverbindung, beispielsweise ein stabilisierendes Calciumsalz, oder ein Gemisch aus zwei oder mehr solcher Verbindungen, und als Polymeres ein halogenhaltiges thermoplastisches Harz oder ein Gemisch aus zwei oder mehr halogenhaltigen thermoplastischen Harzen enthalten ist und wobei die Polymerzusammensetzung weniger als 0,1 phr an β-Diketon oder Salzen eines β-Diketons oder deren Gemischen enthält.

Der Gehalt einer erfindungsgemäßen Polymerzusammensetzung an β-Diketon oder Salzen eines β-Diketons oder deren Gemischen beträgt beispielsweise weniger als 0,05 oder weniger als 0,01 oder weniger als 0,005 oder weniger als 0,001 oder weniger als 0,005 oder weniger als 0,001 phr. Im Rahmen der vorliegenden Erfindung sind darüber hinaus Polymerzusammensetzungen geeignet, deren Gehalt an β-Diketon oder Salzen eines β-Diketons oder deren Gemischen, bezogen auf das Gewicht der Polymerzusammensetzung, bei etwa 0 1 Gew.-% oder weniger, beispielsweise bei weniger als etwa 0,05 Gew.-%, weniger als etwa 0,01 Gew.-% oder weniger als etwa 0,005 Gew.-%, bezogen auf die gesamte Stabilisatorzusammensetzung, liegt. Beispielsweise kann der Gehalt einer erfindungsgemäßen Polymerzusammensetzung an β-Diketon oder Salzen eines β-Diketons oder deren Gemischen weniger als etwa 1000 ppm, insbesondere weniger als etwa 500 ppm oder weniger als etwa 100 ppm oder weniger als etwa 50 ppm betragen.

Eine erfindungsgemäße Polymerzusammensetzung enthält ein stabilisierendes Calciumsalz oder ein Gemisch aus zwei oder mehr solcher Salze als Komponente A vorzugsweise in einer Menge von 0,01 bis 2 phr, bezogen auf das halogenhaltige Harz. Eine erfindungsgemäße Polymerzusammensetzung enthält Farbstoffe oder Pigmente oder deren Gemisch als Komponente B vorzugsweise in einer Menge von 0,01 bis 2 phr, bezogen auf das halogenhaltige Harz. Eine erfindungsgemäße Polymerzusammensetzung enthält ein Hydroxylgruppen tragendes Isocyanurat oder ein Gemisch aus zwei oder mehr solcher Verbindungen als Komponente C vorzugsweise in einer Menge von 0,01 bis 2 phr, bezogen auf das halogenhaltige Harz.

Eine erfindungsgemäße Polymerzusammensetzung enthält vorzugsweise einen Hydrotalcit oder ein Gemisch aus zwei oder mehr Hydrotalciten. Ebenfalls vom Umfang der Erfindung betroffen sind daher Polymerzusammensetzungen, die ein Zinksalz oder ein Gemisch aus zwei oder mehr Zinksalzen enthalten. Darüber hinaus sind vom Umfang der Erfindung Polymerzusammensetzungen betroffen, die ein Polyol enthalten sowie Polymerzusammensetzungen, die im wesentlichen frei von β-Diketonen oder Salzen von β-Diketonen oder deren Gemischen sind.

Für eine Polymerzusammensetzung gemäß der vorliegenden Erfindung gelten hinsichtlich der in einer solchen Polymerzusammensetzung enthaltenen Stabilisatorkomponenten die bereits im Hinblick auf die Stabilisatorzusammensetzung gemachten Ausführungen. Die Polymerzusammensetzungen gemäß der vorliegenden Erfindung unterscheiden sich von den erfindungsgemäßen Stabilisatorzusammensetzungen letztendlich dadurch, dass die Stabilisatorzusammensetzungen kein Polymeres enthalten. Ansonsten sind die Eigenschaften der in der Polymerzusammensetzung enthaltenen Stabilisatorzusammensetzungen und der erfindungsgemäßen Stabilisatorzusammensetzungen identisch, so dass die oben genannten Ausführungen hinsichtlich der Stabilisatorzusammensetzungen auch auf die in den Polymerzusammensetzungen enthaltenen Stabilisatorkomponenten gelten.

Im Rahmen einer bevorzugten Ausführungsform der vorliegenden Erfindung enthält eine erfindungsgemäße Polymerzusammensetzung die erfindungsgemäße Stabilisatorzusammensetzung in einer Menge von etwa 0,1 bis 20 phr, insbesondere etwa 0,5 bis etwa 15 phr oder etwa 1 bis etwa 12 phr oder etwa 1,5 bis 5 phr. Die für den Einzelfall optimale Menge hängt dabei auch von den verwendeten Gleitmitteln ab. Die Einheit phr steht für "per hundred resin" und betrifft damit Gewichtsteile pro 100 Gewichtsteile Polymeres. Geeignete Einsatzmengen liegen beispielsweise innerhalb eines Bereichs von etwa 2 - 3 phr bzw. 3 - 4 phr, wenn ein Anteil an Verarbeitungshilfsmitteln hinzugerechnet wird.

Vorzugsweise enthält eine erfindungsgemäße Polymerzusammensetzung als halogeniertes Polymeres zumindest anteilsweise PVC, wobei der PVC-Anteil insbesondere mindestens etwa 20, vorzugsweise mindestens etwa 50 Gew.-%, beispielsweise mindestens etwa 80 oder mindestens etwa 90 Gew.-% beträgt.

Die Vermischung von Polymeren oder Polymeren und der erfindungsgemäßen Stabilisatorzusammensetzung zur Herstellung der erfindungsgemäßen Polymerzusammensetzungen kann grundsätzlich zu jedem beliebigen Zeitpunkt vor oder während der Verarbeitung des Polymeren erfolgen. So kann die Stabilisatoizusammensetzung beispielsweise dem in Pulver- oder Granulatform vorliegenden Polymeren vor der Verarbeitung zugemischt werden. Es ist jedoch ebenso möglich, die Stabilisatorzusammensetzung dem Polymeren oder den Polymeren in erweichtem oder geschmolzenem Zustand, beispielsweise während der Verarbeitung in einem Extruder zuzusetzen.

Gegenstand der vorliegenden Erfindung ist daher auch ein Verfahren zur Herstellung einer Polymerzusammensetzung, enthaltend eine Stabilisatorzusammensetzung und mindestens ein Polymeres, bei dem mindestens
(a) eine stabilisierende Calciumverbindung oder ein Gemisch aus zwei oder mehr stabilisierenden Calciumverbindungen als Komponente A und
(b) mindestens ein Farbstoff oder ein Pigment oder ein Gemisch aus zwei oder mehr davon als Komponente B, wobei der Farbstoff oder das Pigment einem halogenhaltigen thermoplastischen Harz den Farbwert von L ≤ 95, a = 0 ± >1 oder b = 0 ± >1 oder a = 0 ± >1 und b = 0 ± >1 verleiht, wobei der Farbwert im Lab-System mit der Lichtart D65 gemessen wird, und
(c) mindestens ein Hydroxylgruppen tragendes Isocyanurat oder ein Gemisch aus zwei oder mehr solcher Verbindungen als Komponente C und
(d) mindestens ein halogenhaltiges thermoplastisches Harz oder ein Gemisch aus zwei oder mehr halogenhaltigen thermoplastischen Harzen

miteinander vermischt werden, wobei die Polymerzusammensetzung nach dem Vermischen weniger als 0,1 phr an β-Diketon oder Salzen eines β-Diketons oder deren Gemischen enthält

Die erfindungsgemäße Stabilisatorzusammensetzung kann in beliebiger physikalischer Form, z. B. als Pulvermischung, Press-, Sprüh- oder Microgranulat, Schuppe oder Pastille vorliegen. Diese Produktformen können entweder aus Pulvermischungen durch Druck und/oder Temperatur und/oder durch Zugabe von Granulierhilfsmitteln in Granulatform gebracht werden oder durch Abkühlen bzw. Absprühen von Schmelzen der erfindungsgemäßen Zusammensetzung zu Schuppen, Pastillen oder Prills geformt werden. Zur Herstellung von halogenhaltigen Harzmassen können die Einzelsubstanzen direkt oder als Mischung in den o.g. Produktformen vor oder während der Verarbeitung zugegeben werden. Die halogenhaltige thermoplastische Harzmasse kann dann in an sich bekannter Weise zu Formkörpern geformt werden.

Eine erfindungsgemäße Polymerzusammensetzung kann auf bekannte Weise in eine gewünschte Form gebracht werden. Geeignete Verfahren sind beispielsweise Kalandrieren, Extrudieren, Spritzgießen, Sintern, Extrusions-Blasen oder das Plastisol-Verfahren. Eine erfindungsgemäße Polymerzusammensetzung kann beispielsweise auch zur Herstellung von Schaumstoffen verwendet werden. Grundsätzlich eignen sich die erfindungsgemäße Polymerzusammensetzung zur Herstellung von Hart- oder Weich-PVC.

Eine erfindungsgemäße Polymerzusammensetzung kann zu Formkörpern verarbeitet werden. Gegenstand der vorliegenden Erfindung sind daher auch Formkörper zum Einsatz im bewitterten Aussenbereich, mindestens enthaltend eine erfindungsgemäße Stabilisatorzusammensetzung oder eine erfindungsgemäße Polymerzusammensetzung.

Der Begriff "Formkörper" umfasst im Rahmen der vorliegenden Erfindung grundsätzlich alle dreidimensionalen Gebilde, die aus einer erfindungsgemäßen Polymerzusammensetzung herstellbar sind. Der Begriff "Formkörper" umfasst im Rahmen der vorliegenden Erfindung beispielsweise Drahtummantelungen, Automobilbauteile, beispielsweise Automobilbauteile wie sie im Motorraum oder an den Außenflächen eingesetzt werden, Kabelisolierungen, Kabelummantelungen, Dekorationsfolien, Agrarfolien, Schläuche, Dichtungsprofile, Bürofolien, Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Platten, Schaumplatten, Coextrudate mit recyceltem Kern oder Gehäuse für elektrische Apparaturen oder Maschinen, beispielsweise Computer oder Haushaltsgeräte, insbesondere zum Einsatz im bewitterten Aussenbereich. Weitere Beispiele für aus einer erfindungsgemäßen Polymerzusammensetzung herstellbare Formkörper sind Kunstleder, Bodenbeläge, Textilbeschichtungen, Tapeten, Coil-Coatings oder Unterbodenschutz für Kraftfahrzeuge.

Gegenstand der vorliegenden Erfindung ist auch die Verwendung einer erfindungsgemäßen Stabilisatorzusammensetzung oder einer erfindungsgemäß hergestellten Stabilisatorzusammensetzung oder einer erfindungsgemäßen Polymerzusammensetzung bei der Herstellung von polymeren Formkörpern oder Oberflächenbeschichtungsmitteln zum Einsatz im bewitterten Außenbereich.

Insbesondere ist Gegenstand der Erfindung die Verwendung einer Stabilisatorzusammensetzung zur Stabilisierung eines halogenhaltigen thermoplastischen Harzes oder eines Gemischs aus zwei oder mehr halogenhaltigen thermoplastischen Harzen, wobei die Stabilisatorzusammensetzung mindestens
(a) eine stabilisierende Calciumverbindung oder ein Gemisch aus zwei oder mehr stabilisierenden Calciumverbindungen als Komponente A und
(b) mindestens einen Farbstoff oder ein Pigment oder in Gemisch aus zwei oder mehr davon als Komponente B und
(c) mindestens ein Hydroxylgruppen tragendes Isocyanurat oder ein Gemisch aus zwei oder mehr solcher Verbindungen als Komponente C,
enthält und der Anteil an β-Diketon oder Salzen eines β-Diketons oder deren Gemischen an der Stabilisatorzusammensetzung weniger als 0,1 Gew.-% beträgt.

Die Erfindung wird nachfolgend durch Beispiele näher erläutert.

### Beispiele:

Gemäß den folgenden Rezepturen wurden 3 PVC-Probestücke hegestellt:

**Tabelle 1: Zusammensetzung der Probestücke 1, 2 und 3**

| | 1 | 2 | 3 |
|---|---|---|---|
| S-PVC (K-Wert = 68) | 100 | 100 | 100 |
| Kreide | 6 | 6 | 6 |
| Farbruß | 0,6 | 0,6 | 0,6 |
| Pb-Stabilisator | 4,45 | - | - |
| Glycerintristearat | - | 0,5 | 0,5 |
| Ca-Al-Hydroxyphosphit | - | 0,1 | 0,1 |
| Zn-Stearat | - | 1,1 | 1,1 |
| Ca-Acetylacetonat | - | 0,1 | - |
| Benzoylstearoylmethan | - | 0,3 | - |
| PE-Wachs | - | 0,2 | 0,2 |
| Ca(OH)₂ | - | 0,32 | 0,32 |
| THEIC | - | 0,18 | 0,18 |
| Irganox 1076 | - | 0,09 | 0,09 |
| process aid | 1,5 | 0,5 | 0,5 |

Die Probestücke wurden anschließend einer Bewitterung mit den folgenden Bedingungen ausgesetzt:
- Schwarzstandardtemperatur:: 50°C ± 3°C
- Benässungsverfahren:: 4 h nass / 4 h trocken
- Lampenart (295 - 400 nm):: UVA - 340

Unter den oben genannten Bedingungen verhielten sich die Probestücke wie folgt:

**Tabelle 2: Testergebnisse für Probestücke 1, 2 und 3:**

| Probestück | Farbstabil | deutliche Ausbleichung | vollständige Ausbleichung |
|---|---|---|---|
| 1 | 500 h | 1000 h | 1000 h |
| 2 | 500 h | 1000 h | 1500 h |
| 3 | 1500 h | 2000 h | 2500 h |

## Patentansprüche

1. Stabilisatorzusammensetzung zur Stabilisierung halogenhaltiger thermoplastischer Harze, umfassend
(a) eine stabilisierende Calciumverbindung oder ein Gemisch aus zwei oder mehr solcher Verbindungen als Komponente A und
(b) mindestens einen Farbstoff oder ein Pigment oder deren Gemisch als Komponente B, wobei der Farbstoff oder das Pigment einem halogenhaltigen thermoplastischen Harz den Farbwert von L ≤ 95, a = 0 ± >1 oder b = 0 ± >1 oder a = 0 ± >1 und b = 0 ± >1 verleiht wobei der Farbwert im Lab-System mit der Lichtart D65 gemessen wird, und
(c) mindestens ein Hydroxylgruppen tragendes Isocyanurat als Komponente C,
wobei der Gehalt der Stabilisatorzusammensetzung an β-Diketon oder Salzen eines β-Diketons oder deren Gemischen weniger als 0,1 Ge-w.-%, bezogen auf die gesamte Stabilisatorzusammensetzung, beträgt.

2. Stabilisatorzusammensetzung nach Anspruch 1, **dadurch gekennzeichnet, dass** der Gehalt an β-Diketon oder Salzen eines β-Diketons oder deren Gemischen weniger als 0,01 Gew.%, bezogen auf die gesamte Stabilisatorzusammensctzung, beträgt.

3. Stabilisatorzusammensetzung nach Anspruch 1 oder 2, **dadurch gekennzeichnet, dass** sie im wesentlichen frei von β-Diketon oder Salzen eines β-Diketons oder deren Gemischen ist

4. Stabilisatorzusammensetzung nach einem der Ansprüche 1 bis 3, **dadurch gekennzeichnet, dass** Sie einen oder mehrere Zusatzstoffe enthält.

5. Stabilisatorzusammensetzung nach einem der Ansprüche 1 bis 4, **dadurch gekennzeichnet, dass** sie ein Zinksalz enthält.

6. Stabilisatoizusammensetzungen nach einem der Ansprüche 1 bis 5, **dadurch gekennzeichnet, dass** sie ein Polyol enthält.

7. Polymerzusammensetzung, enthaltend eine Stabilisatorzusammensetzung, einen Farbstoff oder ein Pigment oder beides und mindestens ein Polymeres, wobei als Stabilisatorzusammensetzung, mindestens ein Farbstoff oder ein Pigment oder deren Gemisch enthalten ist, wobei der Farbstoff oder das Pigment einem halogenhaltigen thermoplastischen Harz den Farbwert von L ≤ 95, a = 0 ± >1 oder b = 0 ± >1 oder a = 0 ± >1 und b = 0 ± >1 verleiht, wobei der Farbwert im Lab-System mit der Lichtart D65 gemessen wird, und mindestens eine stabilisierende Calciumverbindung oder ein Gemisch aus zwei oder mehr solcher Verbindungen und mindestens ein Hydroxylgruppen tragendes Isocyanurat und als Polymeres ein halogenhaltiges thermoplastisches Harz oder ein Gemisch aus zwei oder mehr halogenhaltigen thermoplastischen Harzen enthalten ist und wobei die Polymerzusammensetzung weniger als 0,1 phr an β-Diketon oder Salzen eines β-Diketons oder deren Gemischen enthält.

8. Polymerzusammensetzung nach Anspruch 7, **dadurch gekennzeichnet, dass** sie im wesentlichen frei ist von β-Diketon oder Salzen eines β-Diketons oder deren Gemischen.

9. Polymerzusammensetzung nach Anspruch 7 oder 8, **dadurch gekennzeichnet, dass** sie ein Zinksalz enthält.

10. Polymerzusammensetzung nach einem der Ansprüche 7 bis 9, **dadurch gekennzeichnet, dass** sie ein Polyol enthält

11. Formkörper zum Einsatz im bewitterten Außenbereich, mindestens enthaltend eine Stabilisatorzusammensetzung gemäß einem der Ansprüche 1 bis 6 oder eine Polymerzusammensetzung gemäß einem der Ansprüche 7 bis 10.

12. Verwendung einer Stabilisatorzusammensetzung gemäß einem der Ansprüche 1 bis 6 oder einer Polymerzusammensetzung gemäß einem der Ansprüche 7 bis 10 bei der Herstellung von polymeren Formkörpern oder Oberilächenbeschichtungsmitteln zum Einsatz im bewitterten Außenbereich.

13. Verfahren zur Herstellung einer Polymerzusammensetzung, bei dem mindestens
(a) eine stabilisierende Calciumverbindung oder ein Gemisch aus zwei oder mehr stabilisierenden Calciumverbindungen als Komponente A und
(b) mindestens ein Farbstoff oder ein Pigment oder ein Gemisch aus zwei oder mehr davon als Komponente B, wobei der Farbstoff oder das Pigment einem halogenhaltigen thermoplastischen Harz den Farbwert von L ≤ 95, a = 0 ± >1 oder b = 0 ± >1 oder a = 0 ± >1 und b = 0 ± >1 verleiht, wobei der Farbwert im Lab-System mit der Lichtart D65 gemessen wird, und
(c) mindestens ein Hydroxylgruppen tragendes Isocyanurat als Komponente C und
(d) mindestens ein halogenhaltiges thermoplastisches Harz oder ein Gemisch aus zwei oder mehr halogenhaltigen thermoplastischen Harzen
miteinander vermischt werden, wobei die Polymerzusammensetzung nach dem Vermischen weniger als 0,1 phr an β-Diketon oder Salzen eines β-Diketons oder deren Gemischen enthält

## Claims

1. A stabilizer composition for the stabilization of halogen-containing thermoplastic resins, comprising
(a) a stabilizing calcium compound or a mixture composed of two or more such compounds as component A and
(b) at least one dye or one pigment or their mixture as component B, where the dye or the pigment gives a halogen-containing thermoplastic resin the chromaticity coordinate L ≤ 95, a = 0 ± >1 or b = 0 ± >1 or a = 0 ± >1 and b = 0 ± >1, where the chromaticity coordinate is measured with illuminant D65 in the Lab system, and
(c) at least one isocyanurate bearing hydroxy groups as component C,
where, based on the entire stabilizer composition, the content of β-diketone or salts of a β-diketone or their mixtures is less than 0.1% by weight in the stabilizer composition.

2. The stabilizer composition as claimed in claim 1, **characterized in that**, based on the entire stabilizer composition, the content of β-diketone or salts of a β-diketone or their mixtures is less than 0.01% by weight.

3. The stabilizer composition as claimed in claim 1 or 2, **characterized in that** it is in essence free from β-diketone or salts of a β-diketone or their mixtures.

4. The stabilizer composition as claimed in any of claims 1 to 3, **characterized in that** it comprises one or more additives.

5. The stabilizer composition as claimed in any of claims 1 to 4, **characterized in that** it comprises a zinc salt.

6. The stabilizer composition as claimed in any of claims 1 to 5, **characterized in that** it comprises a polyol.

7. A polymer composition, comprising a stabilizer composition, a dye or a pigment or both and at least one polymer, comprising as stabilizer composition at least one dye or one pigment or their mixture, where the dye or the pigment gives a halogen-containing thermoplastic resin the chromaticity coordinate L ≤ 95, a = 0 ± >1 or b = 0 ± >1 or a = 0 ± >1 and b = 0 ± >1, where the chromaticity coordinate is measured with illuminant D65 in the Lab system, and at least one stabilizing calcium compound or one mixture composed of two or more such compounds and at least one isocyanurate bearing hydroxy groups and comprising as polymer a halogen-containing thermoplastic resin or one mixture composed of two or more halogen-containing thermoplastic resins where the polymer composition comprises less than 0.1 phr of β-diketone or salts of a β-diketone or their mixtures.

8. The polymer composition as claimed in claim 7, **characterized in that** it is in essence free from β-diketone or salts of a β-diketone or their mixtures.

9. The polymer composition as claimed in claim 7 or 8, **characterized in that** it comprises a zinc salt.

10. The polymer composition as claimed in any of claims 7 to 9, **characterized in that** it comprises a polyol.

11. A molding for use in the weathered outdoor sector, at least comprising a stabilizer composition as claimed in any of claims 1 to 6 or a polymer composition as claimed in any of claims 7 to 10.

12. The use of a stabilizer composition as claimed in any of claims 1 to 6 or of a polymer composition as claimed in any of claims 7 to 10 in the production of polymeric moldings or of surface-coating compositions for use in the weathered outdoor sector.

13. A process for the preparation of a polymer composition, by mixing with one another
(a) at least one stabilizing calcium compound or one mixture composed of two or more stabilizing calcium compounds as component A and
(b) at least one dye or one pigment or one mixture composed of two or more thereof as component B, where the dye or the pigment gives a halogen-containing thermoplastic resin the chromaticity coordinate L ≤ 95, a = 0 ± > 1 or b= 0 ± >1 or a = 0 ± >1 and b = 0 ± >1, where the chromaticity coordinate is measured with illuminant D65 in the Lab system, and
(c) at least one isocyanurate bearing hydroxy groups as component C, and
(d) at least one halogen-containing thermoplastic resin or one mixture composed of two or more halogen-containing thermoplastic resins,
where the polymer composition after mixing comprises less than 0.1 phr of β-diketone or salts of a β-diketone or their mixtures.

## Revendications

1. Composition stabilisante pour la stabilisation de résines thermoplastiques halogénées, comprenant :
(a) un composé du calcium stabilisant ou un mélange de deux de ces composés ou plus en tant que composant A et
(b) au moins un colorant ou un pigment ou un de leurs mélanges en tant que composant B, le colorant ou le pigment conférant à une résine thermoplastique halogénée la valeur chromatique de L ≤ 95, a = 0 ± > 1 ou b= 0 ± > 1 ou a = 0 ± > 1 et b = 0 ±> 1, la valeur chromatique étant mesurée dans le système Lab avec l'illuminant D65, et
(c) au moins un isocyanurate porteur de groupes hydroxyle en tant que composant C,
dans laquelle la teneur de la composition stabilisante en β-dicétone ou en sels de β-dicétone ou en un de leurs mélanges est inférieure à 0,1 % en poids de la composition stabilisante totale.

2. Composition stabilisante selon la revendication 1, **caractérisée en ce que** la teneur en β-dicétone ou en sels de β-dicétone ou en un de leurs mélanges est inférieure à 0,01 % en poids de la composition stabilisante totale.

3. Composition stabilisante selon la revendication 1 ou 2, **caractérisée en ce qu'**elle est sensiblement dépourvue de β-dicétone ou de sels de β-dicétone ou un de leurs mélanges.

4. Composition stabilisante selon l'une des revendications 1 à 3, **caractérisée en ce qu'**elle contient un ou plusieurs additifs.

5. Composition stabilisante selon l'une des revendications 1 à 4, **caractérisée en ce qu'**elle contient un sel de zinc.

6. Composition stabilisante selon l'une des revendications 1 à 5, **caractérisée en ce qu'**elle contient un polyol.

7. Composition polymère, contenant une composition stabilisante, un colorant ou un pigment ou les deux et au moins un polymère, laquelle contient au moins un colorant ou un pigment ou un de leurs mélanges en tant que composition stabilisante, le colorant ou le pigment conférant à une résine thermoplastique halogénée la valeur chromatique de L ≤ 95 ; a = 0 ± > 1 ou b = 0 ± > 1 ou a = 0 ± > 1 et b = 0 ± > 1, la valeur chromatique étant mesurée dans le système Lab avec l'illuminant D65, et au moins un composé du calcium stabilisant ou un mélange de deux de ces composés ou plus et au moins un isocyanurate porteur de groupes hydroxyle et, comme polymère, une résine thermoplastique halogénée ou un mélange de deux résines thermoplastiques halogénées ou plus et la composition polymère contenant moins de 0,1 phr de β-dicétone ou de sels de β-dicétone ou d'un de leurs mélanges.

8. Composition polymère selon la revendication 7, **caractérisée en ce qu'**elle est sensiblement dépourvue de β-dicétone ou de sels de β-dicétone ou d'un de leurs mélanges.

9. Composition polymère selon la revendication 7 ou 8, **caractérisée en ce qu'**elle contient un sel de zinc.

10. Composition polymère selon l'une des revendications 7 à 9, **caractérisée en ce qu'**elle contient un polyol.

11. Moule destiné à être utilisé en milieu extérieur exposé aux intempéries contenant au moins une composition stabilisante selon l'une des revendications 1 à 6 ou une composition polymère selon l'une des revendications 7 à 10.

12. Utilisation d'une composition stabilisante selon l'une des revendications 1 à 6 ou d'une composition polymère selon l'une des revendications 7 à 10 pour la fabrication de moules ou de revêtements de surface polymères destinés à être utilisés en milieu extérieur exposé aux intempéries.

13. Procédé pour la préparation d'une composition polymère, dans lequel on mélange ensemble au moins :
(a) un composé du calcium stabilisant ou un mélange composé de deux composés du calcium stabilisants ou plus en tant que composant A et
(b) au moins un colorant ou un pigment ou un de leurs mélanges en tant que composant B, le colorant ou le pigment conférant à une résine thermoplastique halogénée la valeur chromatique de L ≤ 95, a= 0 ± > 1 ou b = 0 ± > 1 ou a = 0 ± > 1 et b=0 ±> 1, la valeur chromatique étant mesurée dans le système Lab avec l'illuminant D65,
(c) au moins un isocyanurate porteur de groupes hydroxyle en tant que composant C, et
(d) au moins une résine thermoplastique halogénée ou un mélange de deux résines thermoplastiques halogénées ou plus,
dans lequel la composition polymère contient après mélange moins de 0,1 phr de β-dicétone ou de sels de β-dicétone ou d'un de leurs mélanges.
